# EUROPEAN PATENT APPLICATION

(11) **EP 4 800 799 A1**
(43) Date of publication of application: **02.09.2026**
(21) Application number: 24887643.5
(22) Date of filing: 19.09.2024
(51) Int. Cl.: H01M 10/0567, H01M 10/054

(54) **ELECTROLYTE, SODIUM SECONDARY BATTERY AND ELECTRIC DEVICE**

(30) Priority: 09.11.2023 CN 202311486204
(71) Applicant: Contemporary Amperex Technology Co., Limited, Ningde, Fujian 352100 (CN)
(72) Inventor: WU, Kai, Ningde, Fujian 352100 (CN); TIE, Zhiwei, Ningde, Fujian 352100 (CN); ZOU, Hailin, Ningde, Fujian 352100 (CN); CHEN, Peipei, Ningde, Fujian 352100 (CN)
(74) Representative: Lorenz Seidler Gossel Part. mbB
(86) International application number: PCT/CN2024/119776
(87) International publication number: WO 2025/098025

(57) **Abstract**

The present application provides an electrolyte, a sodium secondary battery and an electric device. The electrolyte comprises a first additive and a second additive, the first additive comprises a cyclic ester compound containing a sulfur element, and the second additive comprises one or more of fluorosulfonate and difluorophosphate. The combination use of the first additive and the second additive is beneficial to improving the stability of an SEI film, so that the degree of gas production during circulation and storage of the sodium secondary battery is reduced, and the storage performance, the quick charging performance and the storage performance of the sodium secondary battery are improved.

## Description

### CROSS-REFERENCE TO RELATED APPLICATIONS

The present application claims priority to Chinese Patent Application No. 202311486204.6, entitled "ELECTROLYTE SOLUTION, SODIUM SECONDARY BATTERY, AND ELECTRICAL APPARATUS" filed on November 09, 2023, which is incorporated by reference in the present application.

### TECHNCIAL FIELD

The present application relates to the technical field of sodium batteries, and particularly relates to an electrolyte solution, a sodium secondary battery, and an electrical apparatus.

### BACKGROUND

In recent years, secondary batteries have been widely used in energy storage power systems such as hydropower, thermal power, wind power and solar power stations, as well as the fields of power tools, electric bicycles, electric motorcycles, electric vehicles, military equipment, aerospace and other fields.

Compared with lithium secondary batteries, sodium secondary batteries have a greater competitive advantage due to abundant and widely distributed sodium resources. However, the sodium secondary batteries have the problem of gas production, which seriously affects their electrical performance, making them unable to meet the application needs of new generation of electrochemical systems.

### SUMMARY OF THE INVENTION

The present application is carried out in view of above topic, and aims to provide an electrolyte solution and to improve the stability of an SEI film, thereby reducing the degree of gas production during cycling and storage of a sodium secondary battery, enhancing the storage performance, rapid charge performance, and cycling performance of the sodium secondary battery, and comprehensively improving the performance of the sodium secondary battery.

In a first aspect, the present application provides an electrolyte solution applied to a sodium secondary battery; the electrolyte solution includes a first additive and a second additive; the first additive includes a cyclic ester compound containing a sulfur element, and the second additive includes one or more selected from the group consisting of fluorosulfonate and difluorophosphate; the cyclic ester compound includes a compound having the structure shown in an Formula I, 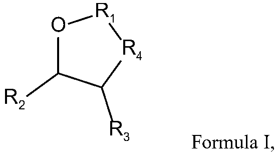 in the Formula I, R₁ includes 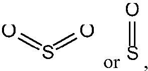 R₂ and R₃ each independently include at least one selected from the group consisting of a hydrogen atom, a C1-C6 alkyl group, a C1-C3 haloalkyl group, a C1-C3 alkoxy group, a C1-C3 haloalkoxy group, a C1-C3 alkenyl group, an ester group, a cyano group, and a sulfonic acid group. R₄ includes at least one selected from the group consisting of an oxygen atom, a C1-C6 alkyl group, a C1-C3 haloalkyl group, a C1-C3 alkoxy group, and a C1-C3 haloalkoxy group.

The first additive which includes the cyclic ester compound containing the sulfur element and/or the second additive which includes difluorophosphate can preferentially reduce to form a film on a negative electrode prior to a solvent in the electrolyte solution, and sulfate components and other components containing a fluorine element, the sulfur element, or a phosphorus element are generated in the SEI film, and therefore, the solubility of the SEI film in the electrolyte solution can be reduced, and then the degree of gas production is greatly reduced. Moreover, the first additive and the second additive synergistically act to improve the stability of the SEI film while maintaining the flexibility, reducing the DC impedance of the sodium secondary battery, improving the storage performance and rapid charge performance of the sodium secondary batteries, thereby comprehensively improving the cycling performance of the sodium secondary battery.

The cyclic ester compound can generate the sulfate components in the SEI film, which can cover a surface of a negative electrode plate to reduce the exposure of the negative electrode plate to the electrolyte solution, thus reducing side reactions and gas production, and improving the performance of the sodium secondary battery.

In any embodiment, in the Formula I, R₁ includes 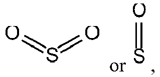 and R₂ and R₃ each independently include at least one selected from the group consisting of the hydrogen atom, the C1-C6 alkyl group, the C1-C3 haloalkyl group, or the C1-C3 alkenyl group. R₄ includes at least one selected from the group consisting of an oxygen atom, a C1-C6 alkyl group, a C1-C3 haloalkyl group, a C1-C3 alkoxy group, and a C1-C3 haloalkoxy group.

In any embodiment, the structure shown in the Formula I includes at least one selected from the group consisting of 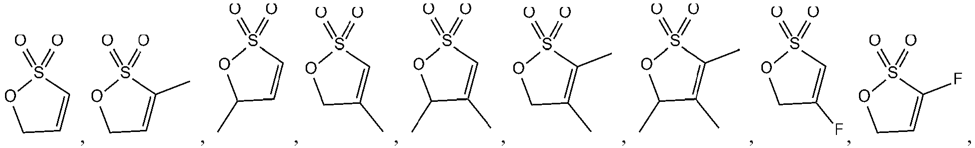 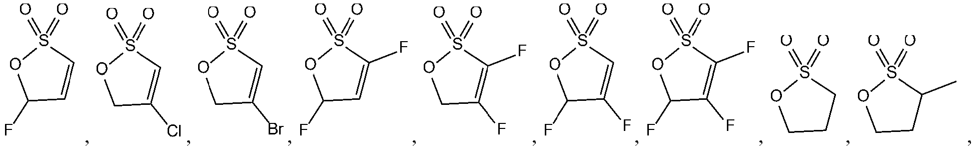 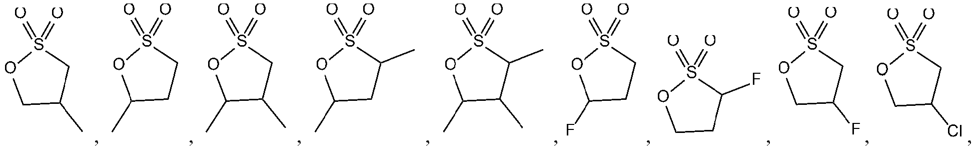 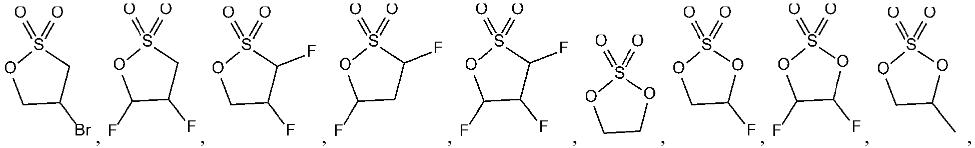 and

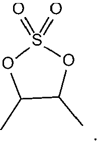

The cyclic ester compounds can all generate the sulfate components in the SEI film, especially, R₂, R₃, R₄ each independently includes the C1-C6 alkyl group or the C1-C3 haloalkyl groups, which can more easily and quickly form the film to cover the surface of the negative electrode sheet, thus reducing the exposure to the electrolyte solution, reducing side reactions and gas production, and improving the performance of the sodium secondary battery.

In any embodiment, the fluorosulfonate includes a compound shown in a Formula II,

(FSO₃)_{y1}M1^{y1+} Formula II

in the Formula II, M1^{y1+} includes one or more selected from the group consisting of Li⁺, Na⁺, K⁺, Rb⁺, Cs⁺, Mg²⁺, Ca²⁺, Ba²⁺, Fe²⁺, Ni²⁺, Al³⁺, Fe³⁺, and Ni³⁺; and y1=1, 2, or 3.

In any embodiment, the difluorophosphate includes a compound shown in a Formula III,

(PO₂F₂)_{y2}M2^{y2+} Formula III

in the Formula III, M2^{y2+} includes one or more selected from the group consisting of Li⁺, Na⁺, K⁺, Rb⁺, Cs⁺, Mg²⁺, Ca²⁺, Ba²⁺, Fe²⁺, Ni²⁺, Al³⁺, Fe³⁺, and Ni³⁺; and y2=1, 2, or 3.

The fluorosulfonate or difluorophosphate can form other components containing the fluorine element, the sulfur element, or the phosphorus element in the SEI film; the SEI film can improve the overall stability of the SEI film on the surface of the negative electrode plate, reduce the overall degree of oxidative decomposition of the SEI film, as well as the solubility in an electrolyte solution solvent, thereby enhancing the storage performance of the sodium secondary battery.

In any embodiment, a mass ratio of the first additive to the second additive is 0.02-500.

The mass ratio of the first additive to the second additive is controlled to be within an appropriate range, which is conducive to reducing the solubility of the SEI film in the electrolyte solution can be reduced, thereby significantly decreasing gas production. Moreover, the first additive and the second additive synergistically act to achieve the storage performance and DC impedance of the sodium secondary battery, thus comprehensively improving the performance of the sodium secondary battery.

In any embodiment, a mass ratio of the first additive to the second additive is 0.2-100.

The mass ratio of the first additive to the second additive is further controlled to be 0.2-100, which is conducive to further improving the cycling performance of the sodium secondary battery.

In any embodiment, based on the total mass of the electrolyte solution, the mass content of the cyclic ester compound is 0.01%-5%.

The mass content of the cyclic ester compound containing the sulfur element is controlled to be within an appropriate range, which is conducive to forming the sulfate components in the SEI film, reducing the overall degree of SEI film rupture caused by the expansion of the sodium secondary battery during cycling, thereby enhancing the overall protective capability of the SEI film and improving the storage performance of the sodium secondary battery.

In any embodiment, based on the total mass of the electrolyte solution, the mass content of the cyclic ester compound is 0.1%-2%.

The mass content of cyclic ester compound containing the sulfur element is further controlled to 0.1%-2%, which is conducive to achieving the storage performance and rapid charge performance of the sodium secondary battery, thereby comprehensively improving the performance of the sodium secondary battery.

In any embodiment, based on the total mass of the electrolyte solution, the mass content of fluorosulfonate is 0.001%-5%.

The mass content of fluorosulfonate is controlled to be within an appropriate range, which is conducive to forming the components containing the fluorine element and the sulfur element in the SEI film, effectively enhancing the overall stability of the interface SEI film, while reducing the degree of dissolution of the interface SEI film in the electrolyte solution, thereby significantly reducing gas production and improving the cycling performance and storage performance of the sodium secondary battery.

In any embodiment, based on the total mass of the electrolyte solution, the mass content of fluorosulfonate is 0.1%-2%.

The mass content of fluorosulfonate is further controlled to 0.1%-2%, which is conducive to achieving the storage performance and rapid charge performance of the sodium secondary battery, thus comprehensively improving the performance of the sodium secondary battery.

In any embodiment, based on the total mass of the electrolyte solution, the mass content of difluorophosphate is 0.001%-5%.

The mass content of difluorophosphate is controlled to be within an appropriate range, which is conducive to forming the components containing the fluorine element and the phosphorus element in the SEI film, effectively enhancing the overall stability of the interfacial SEI film, while reducing the dissolution degree of the interfacial SEI film in the electrolyte solution, thereby greatly reducing the gas production and improving the cycling performance and storage performance of the sodium secondary battery.

In any embodiment, based on the total mass of the electrolyte solution, the mass content of difluorophosphate is 0.1%-2%.

The mass content of difluorophosphate is further controlled to 0.1%-2%, which is conducive to achieving the storage performance and rapid charge performance of the sodium secondary battery, thus comprehensively improving the performance of the sodium secondary battery.

In any embodiment, the electrolyte solution further includes a third additive, and the third additive includes one or more selected from the group consisting of fluoroethylene carbonate, difluoroethylene carbonate, vinylene carbonate, vinylethylene carbonate, maleic anhydride, succinic anhydride, and triallyl phosphate.

The third additive containing unsaturated functional groups is introduced, which conducive to forming an SEI film with higher solubility on the surface of the negative electrode plate prior to the solvent in the electrolyte solution, reducing the overall solubility of the SEI film in the electrolyte solution, namely, reducing the degree of exposure of the negative electrode plate to the electrolyte solution, thereby reducing the degree of gas production and comprehensively improving the performance and service life of the sodium secondary battery.

In any embodiment, based on the total mass of the electrolyte solution, the mass content of the third additive is 0.01%-10%.

The mass content of the third additive is controlled to be within an appropriate range, sufficient third additive can be provided to form the SEI film with higher solubility, thereby reducing the overall solubility of the SEI film in the electrolyte solution, decreasing the degree of exposure of the negative electrode plate to the electrolyte solution, then reducing gas production, and comprehensively improve the performance of the battery.

In any embodiment, based on the total mass of the electrolyte solution, the mass content of the third additive is 0.1%-5%.

The mass content of the third additive is controlled to 0.1%-5%, which is conducive to achieving the storage performance and rapid charge performance of the sodium secondary battery, thus comprehensively improving the performance of the sodium secondary battery.

In any embodiment, the electrolyte solution includes a sodium salt, and the sodium salt includes one or more selected from the group consisting of NaPF₆, NaBF₄, NaN(SO₂F)₂, NaClO₄, NaAsF₆, NaB(C₂O₄)₂, and NaBF₂(C₂O₄).

In any embodiment, the electrolyte solution includes a solvent, and the solvent includes one or more selected from the group consisting of chain carbonate solvents, chain carboxylate solvents, cyclic carbonate solvents, and ether solvents.

In any embodiment, the chain carbonate solvent includes one or more selected from the group consisting of dimethyl carbonate, diethyl carbonate, methyl ethyl carbonate, methyl propyl carbonate, methyl isopropyl carbonate, methyl butyl carbonate, ethyl propyl carbonate, dipropyl carbonate, and dibutyl carbonate;
the chain carboxylate solvents include one or more selected from the group consisting of methyl formate, ethyl formate, methyl propionate, ethyl propionate, propyl propionate, ethyl butyrate, methyl acetate, ethyl acetate, and propyl acetate;
the cyclic carbonate solvents include one or more selected from the group consisting of ethylene carbonate, propylene carbonate, butylene carbonate, vinylene carbonate, fluoroethylene carbonate, ethylene sulfite, propylene sulfite, vinylethylene carbonate, 4-ethynyl-1,3-dioxolan-2-one, cis-4,5-difluoro-1,3-dioxolan-2-one, trans-4,5-difluoro-1,3-dioxolan-2-one; and
the ether solvents include one or more selected from the group consisting of dioxolane, tetrahydrofuran, 2-methyltetrahydrofuran, tetrahydropyran, 1,2-dimethoxyethane, diethylene glycol dimethyl ether, 1,2-diethoxyethane, and 1,2-dibutoxyethane.

In a second aspect, the present application provides a sodium secondary battery, which includes a positive electrode plate, a negative electrode plate, and the electrolyte solution provided in the first aspect of the present application.

In any embodiment, the positive electrode plate includes a positive electrode current collector and a positive electrode material layer on at least one side of the positive electrode current collector; the positive electrode material layer includes a positive electrode active material, and the positive electrode active material includes at least one selected from the group consisting of layered transition metal oxides, Prussian blue compounds, and polyanion compounds.

In any embodiment, the layered transition metal oxide includesNaₓMnₐFe_{b}Ni_{c}M_{d}NₑO_{2-δ}Q_{f}, in which, M includes at least one selected from the group consisting of Ti, Li, V, Cr, Cu, Zn, Zr, Nb, Mo, Sn, Hf, Ta, Mg, and Al; N includes at least one selected from the group consisting of Si, P, B, S, and Se; Q includes at least one selected from the group consisting of F, Cl, and N; 0.66≤x≤1, 0<a≤0.7, 0<b≤0.7, 0<c≤0.23, 0≤d<0.3, 0≤e≤0.3, 0≤f≤0.3, 0≤δ≤0.3, a+b+c+d+e=1, 0<e+f≤0.3, 0<(e+f)/a≤0.3, 0.2≤d+e+f≤0.3, and (b+c)/a≤1.5.

In any embodiment, the positive electrode active material includes a layered transition metal oxide containing a Cu element; and
the mass content of the cyclic ester compound in the electrolyte solution is greater than or equal to 0.002 times the mass content of the Cu element in the positive electrode active material.

The Cu element is introduced into the positive electrode active material, which is beneficial for the structural stability of the positive electrode active material; meanwhile, the Cu element in the positive electrode active material can also oxidize with the cyclic ester compound containing the sulfur element at the positive electrode plate interface to form an insoluble Cu salt, which is conducive to reducing the degree of gas production due to oxidative decomposition of the electrolyte solution on the positive electrode plate. The ratio of the mass content of the cyclic ester compound in the electrolyte solution to the mass content of the Cu element in the positive electrode active material is controlled to be within an appropriate range, thus effectively reducing the degree of gas production due to the oxidative decomposition of the electrolyte solution on the positive electrode plate.

In any embodiment, the mass content of the Cu element in the positive electrode active material is less than or equal to 23%.

The mass content of the Cu element in positive electrode active material is controlled to be within an appropriate range, which is conducive to providing sufficient Cu element to improve the structural stability of the positive electrode active materials and reducing the degree of degrading of the performance of the sodium secondary battery caused by the oxidative decomposition of the added electrolyte solution due to excessively high content of the Cu element in the positive electrode active material.

In any embodiment, the mass content of the Cu element in the positive electrode active material is 6.5%-18%.

The mass content of the Cu element in the positive electrode active material is further controlled to 6.5%-18%, which is conducive to further balancing the storage performance and rapid charge performance of the sodium secondary battery.

In any embodiment, the negative electrode plate includes a negative electrode current collector and a negative electrode material layer on at least one side of the negative electrode current collector, and the negative electrode material layer includes a Ca element; and
the mass ratio of the cyclic ester compound in the electrolyte solution to the mass of the Ca element in the negative electrode material layer is greater than or equal to 1.

The Ca element is introduced into the negative electrode active material, which is conducive to reducing the formation of sodium dendrites; meanwhile, the Ca element is introduced into the negative electrode active material, which also promotes the formation of the SEI film containing the calcium salt with the cyclic ester compound containing the sulfur element, thereby improving the overall toughness of the SEI film and reducing the DC impedance of sodium secondary batteries. The ratio of the mass content of the cyclic ester compound in the electrolyte solution to the mass content of the Ca element in the negative electrode material layer is controlled to be within an appropriate range, thus achieving both the storage performance and rapid charge performance of the sodium secondary battery.

In any embodiment, the mass content of the Ca element in the negative electrode material layer is 0.1-3,000 ppm.

The mass content of the Ca element in the negative electrode material layer is controlled to be within an appropriate range, and the SEI film containing the calcium salt can be formed, thus improving the overall toughness of the SEI film, and reducing the DC impedance of the sodium secondary battery, reducing the degree of degrading of the sodium secondary battery performance caused by the increase in DC impedance, and achieving both the storage performance and rapid charge performance of the sodium secondary battery.

In any embodiment, the mass content of the Ca element in the negative electrode material layer is 50-1,000 ppm.

In any embodiment, the mass content of the Ca element in the negative electrode material layer is 100-1,000 ppm.

The mass content of the Ca element in the negative electrode material layer is controlled to 50-1,000 ppm or 100-1,000 ppm, which is conducive to further comprehensively improving the storage performance and rapid charge performance of the sodium secondary battery.

In any embodiment, the negative electrode material layer further includes a negative electrode active material, and the negative electrode active material includes one or more selected from the group consisting of hard carbon, metallic sodium, tin alloy, and a metal oxide.

In any embodiment, at a charge rate of 0.05 C, the capacity of the negative electrode plate within the charge range of 0.5-1 V is 9-140 mAh/g.

In the charge range of 0.5-1 V, the capacity of the negative electrode plate is controlled to be within an appropriate range, thus sufficient capacity of the negative electrode plate can be provided to meet the energy density requirements of the sodium secondary battery, and moreover, the degree of degrading of the performance of the sodium secondary battery caused by excessive gas production due to an overly large capacity of the negative electrode plate can be reduced.

In any embodiment, at a charge rate of 0.05C, the capacity of the negative electrode plate in the charge range of 0.5-1 V is 18-70 mAh/g.

In the charge range of 0.5-1 V, the capacity of the negative electrode plate is further controlled to 18-70 mAh/g, which is conducive to achieving both the energy density and storage performance of the sodium secondary battery.

In a third aspect, the present application provides an electrical apparatus, which includes the sodium secondary battery in the second aspect of the present application.

### BRIEF DESCRIPTION OF THE DRAWINGS

FIG. 1 is a schematic diagram of a sodium secondary battery according to an embodiment of the present application.
FIG. 2 is an exploded view of a sodium secondary battery shown in FIG. 1 according to an embodiment of the present application.
FIG. 3 is a schematic diagram of a battery module according to an embodiment of the present application.
FIG. 4 is a schematic diagram of a battery pack according to an embodiment of the present application.
FIG. 5 is an exploded view of a battery pack shown in FIG. 4 according to an embodiment of the present application.
FIG. 6 is a schematic diagram of an electrical apparatus using a sodium secondary battery as a power source according to an embodiment of the present application.

Reference numerals:
1, battery pack; 2, upper box; 3, lower box; 4, battery module; 5, sodium secondary battery; 51, case; 52, electrode assembly; and 53, top cover assembly.

### DETAILED DESCRIPTION

Embodiments of an electrolyte solution, a sodium secondary battery and an electrical apparatus of the present application are specifically described below in detail with appropriate reference to the accompanying drawings. However, unnecessary detailed explanations may be omitted. For example, there are cases where detailed descriptions of well-known items and repeated descriptions of actually identical structures are omitted. This is to avoid unnecessary redundancy in the following descriptions and to facilitate understanding by those skilled in the art. In addition, the accompanying drawings and subsequent descriptions are provided for those skilled in the art to fully understand the present application, and are not intended to limit the subject matter recited in the claims.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit may be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, wherein a and b are both real numbers. For example, the numerical range "0-5" indicates that all real numbers between "0-5" have been listed herein, and "0-5" is only a shortened representation of these numerical combinations. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method includes steps (a) and (b), meaning that the method may include steps (a) and (b) performed sequentially, or may include steps (b) and (a) performed sequentially. For example, reference to "the method may further include step (c)" indicates that step (c) may be added to the method in any order, for example, the method may comprise steps (a), (b), and (c), or steps (a), (c), and (b), or steps (c), (a), and (b), etc.

Unless otherwise specifically stated, "including" and "comprising" mentioned in the present application indicate either open inclusion or closed inclusion. For example, the terms "including" and "comprising" may indicate that other components not listed may be further included or comprised, or only the listed components may be included or comprised.

Unless otherwise specifically stated, in the present application, the term "or" is inclusive. For example, the phrase "A or B" means "A, B, or both A and B." More specifically, condition "A or B" is met by either of the following: A is true (or exists) and B is false (or does not exist); A is false (or non-existent) and B is true (or exists); or both A and B are true (or exist).

The problem of gas production of sodium secondary batteries severely affects their electrical performance, especially the problem of gas production on a negative electrode plate under low voltage. Generally, film-forming additives are introduced into an electrolyte solution so that an SEI (Solid Electrolyte Interphase) film is formed on the surface of the negative electrode plate, which can to some extent prevent further decomposition of the electrolyte solution and gas production, thereby improving the performance of the sodium secondary batteries. However, the problem of gas production still exist during the cycling and storage of the sodium secondary batteries. Therefore, it is necessary to design an electrolyte solution that meets the application requirements of new generation of electrochemical systems.

### [Electrolyte solution]

Based on this, the present application provides an electrolyte solution applied to a sodium secondary battery; the electrolyte solution includes a first additive and a second additive; the first additive includes a cyclic ester compound containing a sulfur element, and the second additive includes one or more selected from the group consisting of fluorosulfonate and difluorophosphate; the cyclic ester compound includes a compound having the structure shown in an Formula I, 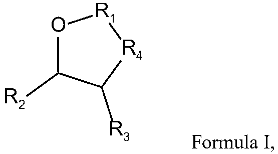 in the Formula I, R₁ includes 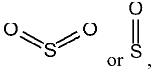 R₂ and R₃ each independently include at least one selected from the group consisting of a hydrogen atom, a C1-C6 alkyl group, a C1-C3 haloalkyl group, a C1-C3 alkoxy group, a C1-C3 haloalkoxy group, a C1-C3 alkenyl group, an ester group, a cyano group, and a sulfonic acid group; and R₄ includes at least one selected from the group consisting of an oxygen atom, a C1-C6 alkyl group, a C1-C3 haloalkyl group, a C1-C3 alkoxy group, and a C1-C3 haloalkoxy group.

The "cyclic ester compound containing sulfur element" here refers to a compound that contains a sulfonic group or a sulfinic group and forms a ring, which can be either a five-membered ring or a six-membered ring.

The "fluorosulfonate" here refers to compounds with anion as 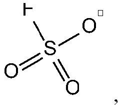 and the anion includes, but is not limited to, one or more selected from the group consisting of Li⁺, Na⁺, K⁺, Rb⁺, Cs⁺, Mg²⁺, Ca²⁺, Ba²⁺, Fe²⁺, Ni²⁺, Al³⁺, Fe 3+, and Ni³⁺.

The "difluorophosphate" here refers to compounds with anion as 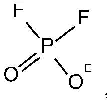 and the anion includes, but is not limited to, one or more selected from the group consisting of Li⁺, Na⁺, K⁺, Rb⁺, Cs⁺, Mg²⁺, Ca²⁺, Ba²⁺, Fe²⁺, Ni²⁺, Al³⁺, Fe³⁺, and Ni³⁺.

In some embodiments, the second additive includes fluorosulfonate.

In some embodiments, the second additive includes difluorophosphate.

In some embodiments, the second additive includes fluorosulfonate and difluorophosphate.

Research result shows that under low pressure, there are two reasons causing high gas production of the sodium secondary battery during cycling and storage: on one hand, a negative electrode potential of the sodium secondary battery is 0.3 V higher than that of the lithium secondary battery; because higher potential can drive the film-forming additives to form the SEI film that is mainly composed of organic components, but the organic components are unstable and will oxidize and decompose at 0.5 V to produce a large amount of gas. On the other hand, the components of the SEI film in the sodium secondary battery mainly include sodium alkyl carbonates formed by solvent reduction. However, sodium alkyl carbonates have high solubility in the electrolyte solution solvent, and the dissolution of the SEI film will expose the negative electrode plate to the electrolyte solution, which causes side reaction between the negative electrode plate and the electrolyte solution, resulting in the production of a large amount of gas.

The first additive which includes the cyclic ester compound containing the sulfur element and/or the second additive which includes difluorophosphate can preferentially reduce to form a film on a negative electrode prior to a solvent in the electrolyte solution, and sulfate components and other components containing a fluorine element, the sulfur element, or a phosphorus element are generated in the SEI film, and therefore, the solubility of the SEI film in the electrolyte solution can be reduced, and then the degree of gas production is greatly reduced. Moreover, the first additive and the second additive synergistically act to improve the stability of the SEI film while maintaining the flexibility, reducing the DC impedance of the sodium secondary battery, improving the storage performance and rapid charge performance of the sodium secondary batteries, thereby comprehensively improving the cycling performance of the sodium secondary battery.

In some embodiments, in the Formula I, R₁ includes 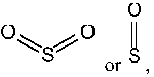 and R₂ and R₃ each independently include at least one selected from the group consisting of the hydrogen atom, the C1-C6 alkyl group, the C1-C3 haloalkyl group, or the C1-C3 alkenyl group; and R₄ includes at least one selected from the group consisting of the oxygen atom, the C1-C6 alkyl group, the C1-C3 haloalkyl group, the C1-C3 alkoxy group, or the C1-C3 haloalkoxy group.

In some embodiments, in the Formula I, R₁ includes 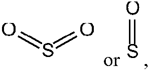 and R₂ and R₃ each independently include at least one selected from the group consisting of the hydrogen atom, the C1-C6 alkyl group, the C1-C3 haloalkyl group, or the C1-C3 alkenyl group; and R₄ includes at least one selected from the group consisting of the oxygen atom, or methylene.

In some embodiments, in the Formula I, R₁ includes 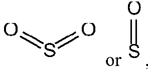 and R₂ and R₃ each independently include at least one selected from the group consisting of the hydrogen atom, the C1-C6 alkyl group and/or the C1-C3 haloalkyl group; and R₄ includes at least one selected from the group consisting of the oxygen atom, or methylene.

The cyclic ester compound can generate the sulfate components in the SEI film, which can cover a surface of a negative electrode plate to reduce the exposure of the negative electrode plate to the electrolyte solution, thus reducing side reactions and gas production, and improving the performance of the sodium secondary battery.

In some embodiments, the structure shown in the Formula I includes at least one selected from the group consisting of

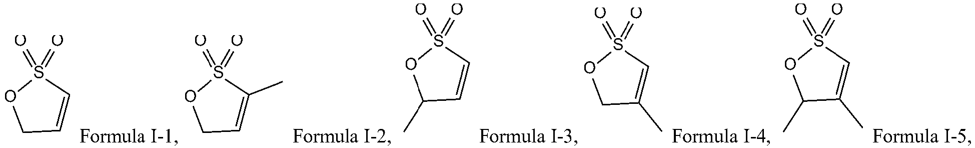

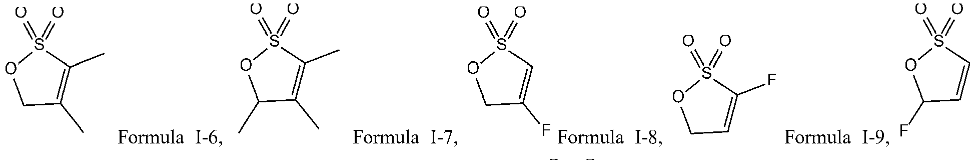

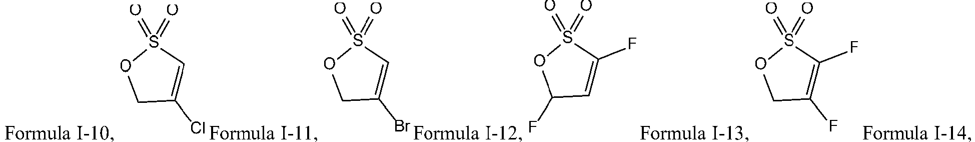

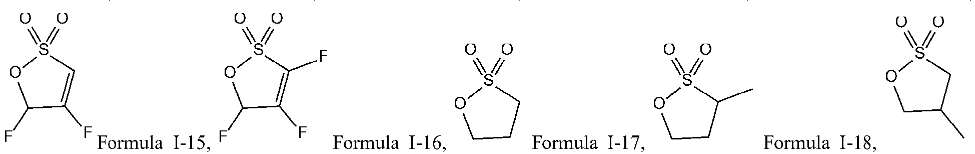

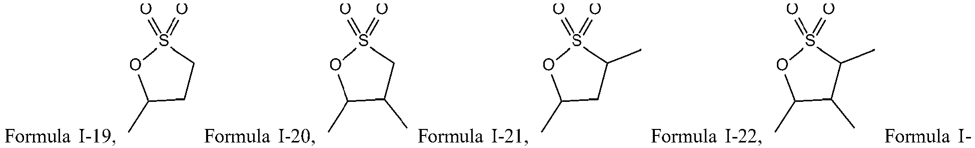

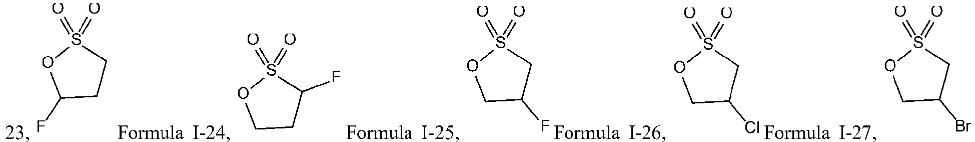

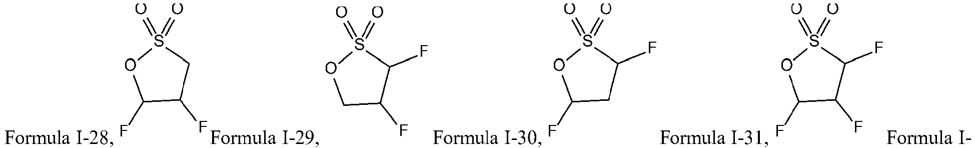

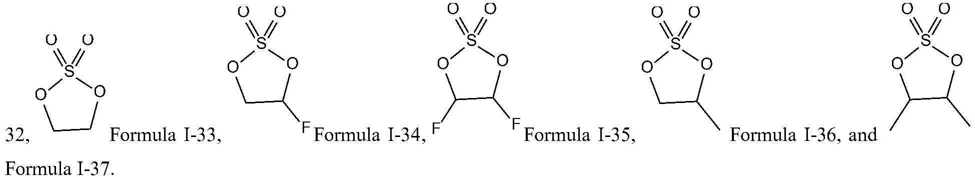

The cyclic ester compounds can all generate the sulfate components in the SEI film, especially, R₂, R₃, and R₄ each independently includes the C1-C6 alkyl group or the C1-C3 haloalkyl groups, which can more easily and quickly form the film to cover the surface of the negative electrode sheet, thus reducing the exposure to the electrolyte solution, reducing side reactions and gas production, and improving the performance of the sodium secondary battery. In addition, R₂ and R₃ are each independently selected from the C1-C3 haloalkyl groups, which is more favorable for regulating an energy band structure of the cyclic ester compound, lowering the LUMO energy level, making it easier to undergo reductive decomposition to form the SEI film; and the components containing the F element in the SEI film are beneficial for improving the overall stability of the SEI film.

In some embodiments, the fluorosulfonate includes a compound shown in a Formula II,

(FSO₃)_{y1}M1^{y1+} Formula II

in the Formula II, M1^{y1+} includes one or more selected from the group consisting of Li⁺, Na⁺, K⁺, Rb⁺, Cs⁺, Mg²⁺, Ca²⁺, Ba²⁺, Fe²⁺, Ni²⁺, Al³⁺, Fe³⁺, and Ni³⁺; and y1=1, 2, or 3.

In some embodiments, M1^{y1+} includes one or both of Li⁺ and Na⁺; and y1=1.

In some embodiments, the fluorosulfonate includes one or more selected from the group consisting of sodium fluorosulfonate, lithium fluorosulfonate, potassium fluorosulfonate, magnesium fluorosulfonate, and iron fluorosulfonate. In some embodiments, the fluorosulfonate includes sodium fluorosulfonate. In some embodiments, the fluorosulfonate includes lithium fluorosulfonate.

In some embodiments, the difluorophosphate includes a compound shown in a Formula III,

(PO₂F₂)_{y2}M2^{y2+} Formula III

in the Formula III, M2^{y2+} includes one or more selected from the group consisting of Li⁺, Na⁺, K⁺, Rb⁺, Cs⁺, Mg²⁺, Ca²⁺, Ba²⁺, Fe²⁺, Ni²⁺, Al³⁺, Fe³⁺, and Ni³⁺; and y2=1, 2, or 3.

In some embodiments, M2^{y2+} includes one or both of Li⁺ and Na⁺; and y2=1.

In some embodiments, the difluorophosphate includes one or more selected from the group consisting of sodium difluorophosphate, lithium difluorophosphate, potassium difluorophosphate, magnesium difluorophosphate, and iron difluorophosphate. In some embodiments, the difluorophosphate includes sodium difluorophosphate. In some embodiments, the difluorophosphate includes lithium difluorophosphate.

The fluorosulfonate or difluorophosphate can form other components containing the fluorine element, the sulfur element, or the phosphorus element in the SEI film; the SEI film can improve the overall stability of the SEI film on the surface of the negative electrode plate, reduce the overall degree of oxidative decomposition of the SEI film, as well as the solubility in an electrolyte solution solvent, thereby enhancing the storage performance of the sodium secondary battery.

In some embodiments, the mass ratio of the first additive to the second additive is 0.02-500. In some embodiments, the mass ratio of the first additive to the second additive may be selected from 0.02, 0.05, 0.1, 0.2, 0.5, 1, 3, 5, 7, 10, 30, 50, 80, 100, 150, 200, 250, 300, 350, 400, 450, 500, or a value within the range formed by any two of them.

The mass ratio of the first additive to the second additive is controlled to be within an appropriate range, which is conducive to reducing the solubility of the SEI film in the electrolyte solution can be reduced, thereby significantly decreasing gas production. Moreover, the first additive and the second additive synergistically act to achieve the storage performance and DC impedance of the sodium secondary battery, thus comprehensively improving the performance of the sodium secondary battery.

In some embodiments, a mass ratio of the first additive to the second additive is 0.2-100.

The mass ratio of the first additive to the second additive is further controlled to be 0.2-100, which is conducive to further improving the cycling performance of the sodium secondary battery.

In some embodiments, based on the total mass of the electrolyte solution, the mass content of the cyclic ester compound is 0.01%-5%. In some embodiments, based on the total mass of the electrolyte solution, the mass content of the cyclic ester compound can be optionally 0.01%, 0.05%, 0.1%, 0.5%, 1%, 2%, 3%, 4%, 5%, or a value within a range formed by any two of them.

The mass content of the cyclic ester compound containing the sulfur element is controlled to be within an appropriate range, which is conducive to forming the sulfate components in the SEI film, reducing the overall degree of SEI film rupture caused by the expansion of the sodium secondary battery during cycling, thereby enhancing the overall protective capability of the SEI film and improving the storage performance of the sodium secondary battery.

In some embodiments, based on the total mass of the electrolyte solution, the mass content of the cyclic ester compound is 0.1%-2%.

The mass content of cyclic ester compound containing the sulfur element is further controlled to 0.1%-2%, which is conducive to achieving the storage performance and rapid charge performance of the sodium secondary battery, thereby comprehensively improving the performance of the sodium secondary battery.

In some embodiments, based on the total mass of the electrolyte solution, the mass content of fluorosulfonate is 0.001%-5%. In some embodiments, based on the total mass of the electrolyte solution, the mass content of fluorosulfonate can be optionally 0.001%, 0.005%, 0.01%, 0.05%, 0.1%, 0.5%, 1%, 2%, 3%, 4%, 5%, or a value within a range formed by any two of them.

It is to be understood that flurosulfonate can participate in the formation of the SEI film and consume part of the flurosulfonate, leading to a decrease in flurosulfonate content in the electrolyte solution. For example, the mass content of flurosulfonate in the electrolyte solution is detected as 0.001% (the mass content of flurosulfonate in the electrolyte solution can be detected with reference to the ion chromatography analysis method stipulated in the General Rules for Modern Analytical Instrument Analysis Methods (JY/T 020-1996, released on January 23, 1997, and implemented on April 1, 1997)); therefore, based on the total mass of the electrolyte solution the mass content of 0.001%-5% of flurosulfonate is within the range protected by the embodiments of the present application.

The mass content of fluorosulfonate is controlled to be within an appropriate range, which is conducive to forming the components containing the fluorine element and the sulfur element in the SEI film, effectively enhancing the overall stability of the interface SEI film, while reducing the degree of dissolution of the interface SEI film in the electrolyte solution, thereby significantly reducing gas production, improving the cycling performance and storage performance of the sodium secondary battery, as well as the mass content of fluorosulfonate from being too high to cause the electrolyte solution conductivity to be too high and affect the rapid charge performance of the sodium secondary battery.

In some embodiments, based on the total mass of the electrolyte solution, the mass content of fluorosulfonate is 0.1%-2%.

The mass content of fluorosulfonate is further controlled to 0.1%-2%, which is conducive to achieving the storage performance and rapid charge performance of the sodium secondary battery, thus comprehensively improving the performance of the sodium secondary battery.

In some embodiment, based on the total mass of the electrolyte solution, the mass content of difluorophosphate is 0.001%-5%. In some embodiments, based on the total mass of the electrolyte solution, the mass content of difluorophosphate can optionally be 0.001%, 0.005%, 0.01%, 0.05%, 0.1%, 0.5%, 1%, 2%, 3%, 4%, 5%, or a value within a range formed by any two of them.

It is to be understood that difluorophosphate can participate in the formation of the SEI film and consume part of the difluorophosphate, leading to a decrease in difluorophosphate content in the electrolyte solution. For example, the mass content of difluorophosphate in the electrolyte solution is detected as 0.001% (the mass content of difluorophosphate in the electrolyte solution can be detected with reference to the ion chromatography analysis method stipulated in the General Rules for Modern Analytical Instrument Analysis Methods (JY/T 020-1996, released on January 23, 1997, and implemented on April 1, 1997)); therefore, based on the total mass of the electrolyte solution the mass content of 0.001%-5% of difluorophosphate is within the range protected by the embodiments of the present application.

The mass content of difluorophosphate is controlled to be within an appropriate range, which is conducive to forming the components containing the fluorine element and the phosphorus element in the SEI film, effectively enhancing the overall stability of the interfacial SEI film, while reducing the dissolution degree of the interfacial SEI film in the electrolyte solution, thereby greatly reducing the gas production and improving the cycling performance and storage performance of the sodium secondary battery.

In some embodiment, based on the total mass of the electrolyte solution, the mass content of difluorophosphate is 0.1%-2%.

The mass content of difluorophosphate is further controlled to 0.1%-2%, which is conducive to achieving the storage performance and rapid charge performance of the sodium secondary battery, thus comprehensively improving the performance of the sodium secondary battery.

In some embodiments, the electrolyte solution further includes a third additive, and the third additive includes one or more selected from the group consisting of fluoroethylene carbonate, difluoroethylene carbonate, vinylene carbonate, vinylethylene carbonate, maleic anhydride, succinic anhydride, and triallyl phosphate.

In some embodiments, the third additive includes fluoroethylene carbonate. In some embodiments, the third additive includes vinylene carbonate. In some embodiments, the third additive includes maleic anhydride. In some embodiments, the third additive includes succinic anhydride. In some embodiments, the third additive includes triallyl phosphate.

The third additive containing unsaturated functional groups is introduced, which conducive to forming an SEI film with higher solubility on the surface of the negative electrode plate prior to the solvent in the electrolyte solution, reducing the overall solubility of the SEI film in the electrolyte solution, namely, reducing the degree of exposure of the negative electrode plate to the electrolyte solution, thereby reducing the degree of gas production and comprehensively improving the performance and service life of the sodium secondary battery.

In some embodiments, based on the total mass of the electrolyte solution, the mass content of the third additive is 0.01%-10%. In some embodiments, based on the total mass of the electrolyte solution, the mass content of the third additive can be optionally 0.01%, 0.05%, 0.1%, 0.5%, 1%, 2%, 4%, 5%, 6%, 8%, 10%, or a value within a range formed by any two of them.

The mass content of the third additive is controlled to be within an appropriate range, sufficient third additive can be provided to form the SEI film with higher solubility, thereby reducing the overall solubility of the SEI film in the electrolyte solution, decreasing the degree of exposure of the negative electrode plate to the electrolyte solution, then reducing gas production, and comprehensively improve the performance of the battery.

In some embodiments, based on the total mass of the electrolyte solution, the mass content of the third additive is 0.1%-5%.

The mass content of the third additive is controlled to 0.1%-5%, which is conducive to achieving the storage performance and rapid charge performance of the sodium secondary battery, thus comprehensively improving the performance of the sodium secondary battery.

In some embodiments, the electrolyte solution includes a sodium salt, and the sodium salt includes one or more selected from the group consisting of NaPF₆, NaBF₄, NaN(SO₂F)₂, NaClO₄, AsF₆, NaB(C₂O₄)₂, and NaBF₂(C₂O₄).

In some embodiments, the sodium salt includes NaPF₆. In some embodiments, the sodium salt includes NaBF₄. In some embodiments, the sodium salt includes NaFSI. In some embodiments, the sodium salt includes NaPF₆ and NaFSI. In some embodiments, the sodium salt includes NaPF₆ and NaClO₄.

In some embodiments, the electrolyte solution includes a solvent, and the solvent includes one or more selected from the group consisting of chain carbonate solvents, chain carboxylate solvents, cyclic carbonate solvents, and ether solvents.

In some embodiments, the chain carbonate solvent includes one or more selected from the group consisting of dimethyl carbonate, diethyl carbonate, methyl ethyl carbonate, methyl propyl carbonate, methyl isopropyl carbonate, methyl butyl carbonate, ethyl propyl carbonate, dipropyl carbonate, and dibutyl carbonate.

In some embodiments, the chain carboxylate solvents include one or more selected from the group consisting of methyl formate, ethyl formate, methyl propionate, ethyl propionate, propyl propionate, ethyl butyrate, methyl acetate, ethyl acetate, and propyl acetate.

In some embodiments, the cyclic carbonate solvents include one or more selected from the group consisting of ethylene carbonate, propylene carbonate, butylene carbonate, vinylene carbonate, fluoroethylene carbonate, ethylene sulfite, propylene sulfite, vinylethylene carbonate, 4-ethynyl-1,3-dioxolan-2-one, cis-4,5-difluoro-1,3-dioxolan-2-one, trans-4,5-difluoro-1,3-dioxolan-2-one.

In some embodiments, the ether solvents include one or more selected from the group consisting of dioxolane, tetrahydrofuran, 2-methyltetrahydrofuran, tetrahydropyran, 1,2-dimethoxyethane, diethylene glycol dimethyl ether, 1,2-diethoxyethane, and 1,2-dibutoxyethane.

### [Positive electrode plate]

The positive electrode plate includes a positive electrode current collector and a positive electrode material layer on at least one side of the positive electrode current collector.

As an example, the positive electrode current collector has two opposite surfaces in the thickness direction, and the positive electrode material layer is arranged on any one or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer base layer and a metal layer formed on at least one surface of the polymer base layer. The composite current collector can be formed by forming a metal material (aluminum, aluminum alloy, nickel alloy, titanium, titanium alloy, silver, silver alloy and the like) on a polymer material substrate material (such as polypropylene (PP), polyethylene glycol terephthalate (PET), polybutylene terephthalate (PBT), Polystyrene (PS), Polyethylene (PE) and the like).

In some embodiments, the positive electrode material layer includes a positive electrode active material, and the positive electrode active material can be a positive electrode active material known in the art for use in batteries. By way of example, the positive electrode active material can include at least one selected from the group consisting of the following materials: layered transition metal oxides, polyanion compounds, or Prussian blue compounds. However, the present application is not limited to these materials, and other conventional materials that can be used as the positive electrode active material of the battery can also be used. These positive electrode active materials can be independently used, or more than two are combined to use. The Prussian blue compounds include NaₓP[R(CN)₆]_{δ}·zH2O, in which, P and R each independently include at least one of transition metal elements, 0<x≤2, 0<δ≤1, and 0≤z≤10; the polyanion compounds include Na_{b}Me_{c}(PO₄)_{d}O₂X, in which, Me includes one or more selected from the group consisting of Ti, Cr, Mn, Fe, Co, Ni, V, Cu, and Zn; X includes one or more selected from the group consisting of F, Cl, and Br; and 0<b≤4, 0<c≤2, and 1≤d≤3.

In some embodiments, the positive electrode active material includes the layered transition metal oxides.

In some embodiments, the layered transition metal oxide includes NaₓMnₐFe_{b}Ni_{c}M_{d}NₑO_{2-δ}Q_{f}, in which, M includes at least one selected from the group consisting of Ti, Li, V, Cr, Cu, Zn, Zr, Nb, Mo, Sn, Hf, Ta, Mg, and Al; N includes at least one selected from the group consisting of Si, P, B, S, and Se; Q includes at least one selected from the group consisting of F, Cl, and N; 0.66≤x≤1, 0<a≤0.7, 0<b≤0.7, 0<c≤0.23, 0≤d<0.3, 0≤e≤0.3, 0≤f≤0.3, 0≤δ≤0.3, a+b+c+d+e=1, 0<e+f≤0.3, 0<(e+f)/a≤0.3, 0.2≤d+e+f≤0.3, and (b+c)/a≤1.5.

The positive electrode active material with the layered transition metal oxides have the advantage of high voltage, but the transition metals will catalyze the oxidation of solvents in the electrolyte solutionto form RH⁺; because RH⁺ is not resistant to reduction, the exposure of the negative electrode plate will also lead to the RH⁺ that migrates to the surface of the negative electrode being reduced to form components that are not resistant to oxidation, thus accelerating gas production at the negative electrode plate. The first additive and the second additive are used in match to make various components formed in the SEI film cooperate with each other, which is conducive to improving the overall stability of the interfacial SEI film, while reducing the overall dissolution of the interfacial SEI film in the electrolyte solution, lowering the degree of exposure of the negative electrode plate to the electrolyte solution, thereby greatly reducing gas production and comprehensively improving the cycling performance and storage performance of the sodium secondary battery.

In some embodiments, the positive electrode active material may not contain the Cu element.

In some embodiments, the positive electrode active material includes the layered transition metal oxide containing the Cu element; the ratio of the mass content of the cyclic ester compound in the electrolyte solution to the mass content of the Cu element in the positive electrode active material is greater than or equal to 0.002. In some embodiments, the ratio of the mass content of the cyclic ester compound in the electrolyte solution to the mass content of the Cu element in the positive electrode active material can be optionally 0.002, 0.004, 0.005, 0.01, 0.05, 0.1, 0.5, 1, 2, 3, 4, 5, 10, 50, 100, 500, 1000, 2000, 5000, or a value within a range formed by any two of them.

In some embodiments, the positive electrode active material includes at least one selected from the group consisting of Na[Cu_{1/9}Ni_{2/9}Fe_{1/3}Mn_{1/3}]O₂, Na_{7/9}[Cu_{2/9}Fe_{1/9}Mn_{2/3}]O₂, and NaNi_{0.7}Co_{0.15}Mn_{0.15}O₂.

It is to be understood that the Cu element is introduced into the positive electrode active material, which is conducive to the structural stability of the positive electrode active material, thereby improving the cycling performance of the sodium secondary battery. Moreover, the Cu element in the positive electrode active material will be subjected to a change in valence at high voltage to produce Cu³⁺. Cu³⁺ has high oxidative activity, and can accelerate the decomposition of the electrolyte solution, thus degrading the performance of the sodium secondary battery. Additionally, the cyclic ester compound containing the sulfur element in the electrolyte solution can react with the Cu element in the positive electrode active material at the positive electrode interface to form insoluble Cu salt, which is conducive to reducing the degree of electrolyte solution decomposition on the positive electrode plate that causes gas production. The ratio of the mass content of the cyclic ester compound in the electrolyte solution to the mass content of the Cu element in the positive electrode active material is controlled to be within an appropriate range, thus effectively reducing the degree of electrolyte solution decomposition on the positive electrode plate that causes gas production.

In some embodiments, the mass content of the Cu element in the positive electrode active material is less than or equal to 23%. In some embodiments, the mass content of the Cu element in the positive electrode active material can be optionally 1%, 2%, 5%, 7%, 10%, 12%, 15%, 18%, 20%, 23%, or a value within the range formed by any two of them.

The mass content of the Cu element in positive electrode active material is controlled to be within an appropriate range, which is conducive to providing sufficient Cu element to improve the structural stability of the positive electrode active materials and reducing the degree of degrading of the performance of the sodium secondary battery caused by the oxidative decomposition of the added electrolyte solution due to excessively high content of the Cu element in the positive electrode active material.

In some embodiments, the mass content of the Cu element in the positive electrode active material is 6.5%-18%.

The mass content of the Cu element in the positive electrode active material is further controlled to 6.5%-18%, which is conducive to further balancing the storage performance and rapid charge performance of the sodium secondary battery.

In some embodiments, the positive electrode material layer optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorine-containing acrylate resin.

In some embodiments, the positive electrode material layer further optionally comprises a conductive agent. As an example, the conductive agent may include at least one of superconducting carbon, acetylene black, carbon black, Ketjen black, carbon dot, carbon nanotube, graphene, and carbon nanofiber.

In some embodiments, the positive electrode plate may be prepared by: dispersing the above components, such as the positive electrode active material, the conductive agent, the binder, and any other component, for preparing the positive electrode plate in a solvent (such as N-methyl pyrrolidone) to form a positive electrode slurry; and coating the positive electrode slurry on the positive electrode current collector, drying, and cold pressing, to provide the positive electrode plate.

### [Negative electrode plate]

The negative electrode plate includes a negative electrode current collector and a negative electrode material layer arranged on at least one side of the negative electrode current collector.

As an example, the negative electrode current collector has two opposite surfaces in the thickness direction, and the negative electrode material layer is arranged on any one or both of the two opposite surfaces of the negative electrode current collector.

In some embodiments, the negative electrode current collector may be a metal foil or a composite current collector. For example, a copper foil may be used as the metal foil. The composite current collector may include a polymer base layer and a metal layer formed on at least one surface of the polymer substrate. The composite current collector can be formed by forming a metal material (copper, copper alloy, nickel, nickel alloy, titanium, titanium alloy, silver, silver alloy and the like) on a polymer material substrate (polypropylene (PP), polyethylene terephthalate (PET), polybutylene terephthalate (PBT), Polystyrene (PS), Polyethylene (PE) and the like).

The negative electrode material layer further includes a negative electrode active material, and the negative electrode active material includes one or more of hard carbon, metallic sodium, sodium-tin alloy, or metal oxides.

The negative electrode active materials all have excellent sodium storage capabilities, which can enable the sodium secondary battery to have high energy density.

In some embodiments, the negative electrode material layer further includes the Ca element; the ratio of the mass content of the cyclic ester compound in the electrolyte solution to the mass content of the Ca element in the negative electrode material layer is greater than or equal to 1. In some embodiments, the ratio of the mass content of the cyclic ester compound in the electrolyte solution to the mass content of the Ca element in the negative electrode material layer can be optionally 1, 2, 3, 4, 5, 6, 7, 8, 9, 10, 100, 200, 300, 400, 500, 600, 700, 800, 900, 1000, or a value within a range formed by any two of the them.

The Ca element is introduced into the negative electrode active material, which is conducive to reducing the formation of sodium dendrites; meanwhile, the Ca element is introduced into the negative electrode active material, which also promotes the formation of the SEI film containing the calcium salt with the cyclic ester compound containing the sulfur element, thereby improving the overall toughness of the SEI film and reducing the DC impedance of sodium secondary batteries. The ratio of the mass content of the cyclic ester compound in the electrolyte solution to the mass content of the Ca element in the negative electrode material layer is controlled to be within an appropriate range, thus achieving both the storage performance and rapid charge performance of the sodium secondary battery.

In some embodiments, the mass content of the Ca element in the negative electrode material layer is 0.1-3,000 ppm. In some embodiments, the mass content of the Ca element in the negative electrode material layer can be optionally 0.1 ppm, 0.5 ppm, 1 ppm, 5 ppm, 10 ppm, 50 ppm, 100 ppm, 200 ppm, 400 ppm, 500 ppm, 600 ppm, 800 ppm, 1000 ppm, 1500 ppm, 2000 ppm, 2500 ppm, 3000 ppm, or a value within a range constituted by any two of them.

In some embodiments, the mass content of the cyclic ester compound in the electrolyte solution is 0.01%-5%, and the mass content of the Ca element in the negative electrode material layer is 0.1-3,000 ppm. As an example, the ratio of the mass content of the cyclic ester compound in the electrolyte solution to the mass content of the Ca element in the negative electrode material layer can be 0.1%/10ppm=100, 1%=10000ppm.

It is to be understood that the Ca element in the negative electrode material layer can participate in the formation of the SEI film and consume part of the Ca element, leading to a decrease in the mass content of the Ca element in the negative electrode material layer; for example, the mass content of the Ca element in the negative electrode material layer can decrease to 1 ppm; therefore, based on the total mass of the negative electrode material layer, the mass content of 0.1-3,000 ppm of the Ca element is within the scope protected by the embodiments of the present application.

The mass content of the Ca element in the negative electrode material layer is controlled to be within an appropriate range, and calcium salt components can be generated in the SEI film, thus improving the overall toughness of the SEI film, reducing the DC impedance of sodium secondary battery, reducing the risk of failure in preparing the negative electrode plate caused by gelation of the slurry due to excessively high content of the Ca element in the negative electrode material layer, the degree of decrease in the first-cycle efficiency loss and gas production caused by the formation of Ca(OH)₂ during preparation, or the degree of degrading of the performance of the sodium secondary battery due to increased DC impedance, as well as achieving both the storage performance and rapid charge performance of the sodium secondary battery.

In some embodiments, the mass content of the Ca element in the negative electrode material layer is 50-1,000 ppm.

In some embodiments, the mass content of the Ca element in the negative electrode material layer is 100-1,000 ppm.

The mass content of the Ca element in the negative electrode material layer is controlled to 50-1,000 ppm or 100-1,000 ppm, which is conducive to further comprehensively improving the storage performance and rapid charge performance of the sodium secondary battery.

In some embodiments, at a charge rate of 0.05 C, the capacity of the negative electrode plate within the charge range of 0.5-1 V is 9-140 mAh/g.

In the charge range of 0.5-1 V, the capacity of the negative electrode plate is controlled to be within an appropriate range, thus sufficient capacity of the negative electrode plate can be provided to meet the energy density requirements of the sodium secondary battery, and moreover, the degree of degrading of the performance of the sodium secondary battery caused by excessive gas production due to an overly large capacity of the negative electrode plate can be reduced.

Within the charge range of 0.5-1 V, the capacity of the negative electrode plate can be tested by any well-known method. As an example, the negative electrode plate is punched into small wafers with a diameter of 14 mm, and metallic sodium sheets are used as the negative electrodes, polypropylene films are used as the separators, and the electrolyte solutions in some embodiments are used as the test electrolyte solutions to assemble a button cell; the button cell is subjected to discharge test in the voltage range of 0.005-2 V under constant current; during discharging, the button cell is discharged to 0.005 V at rates of 0.05 C, 40 µA, and 10 µA in sequence under constant current; during charging, the button cell is charged to 2 V at a rate of 0.05 C under constant current; and the specific capacity (mAh/g) in 0.5-1 V during charging is recorded as the capacity of 0.5-1 V of the negative electrode.

The term "specific capacity" here refers to an actual capacity exhibited by the negative electrode active material per unit mass.

In any embodiment, at a charge rate of 0.05C, the capacity of the negative electrode plate in the charge range of 0.5-1 V is 18-70 mAh/g.

In the charge range of 0.5-1 V, the capacity of the negative electrode plate is further controlled to 18-70 mAh/g, which is conducive to achieving both the energy density and storage performance of the sodium secondary battery.

In some embodiments, the negative electrode film layer optionally includes the binder. The binder can include at least one of Styrene Butadiene Rubber (SBR), polyacrylic acid (PAA), sodium Polyacrylate (PAAS), Polyacrylamide (PAM), polyvinyl alcohol (PVA), Sodium Alginate (SA), polymethylacrylic acid (PMAA) and carboxymethyl Chitosan (CMCS).

In some embodiments, the positive electrode film layer also optionally includes the conductive agent. The conductive agent can include at least one of superconducting carbon, acetylene black, carbon black, Ketjen black, carbon dots, carbon nanotubes, graphene and carbon fibers.

In some embodiments, the negative electrode material also optionally includes other auxiliaries, such as a thickening agent (such as sodium carboxymethylcellulose (CMC-Na)).

In some embodiments, the negative electrode plate may be prepared by: dispersing the above components, such as the negative electrode active material, the conductive agent, the binder and any other component, for preparing the negative electrode plate in a solvent (such as deionized water) to form a negative electrode slurry; and coating the negative electrode slurry on the negative electrode current collector, and performing drying and cold pressing processes to obtain the negative electrode plate.

### [Separator]

In some embodiments, the sodium secondary battery also includes the separator. Any well-known porous separator with high chemical stability and mechanical stability can be used.

In some embodiments, the material of the separator can be selected from at least one of glass fiber, non-woven cloth, polyethylene, polypropylene, and polyvinylidene fluoride. The separator may be a single-layer film or a multi-layer composite film. When the isolation film is the multi-layer composite film, the materials of all layers can be the same or different.

### [Sodium secondary battery]

In some embodiments, the positive electrode sheet, the negative electrode sheet and the separator can be made into an electrode assembly by a winding process or a lamination process.

In some embodiments, the sodium secondary battery can include an outer package. The outer package can be used for packaging the electrode assembly and the electrolyte solution.

In some embodiments, the outer package of the sodium secondary battery can be a hard shell, such as a hard plastic shell, an aluminum shell, and a steel shell. The outer package of the sodium secondary battery can also be a soft package, such as a bag type soft package. The material of the soft package can be plastic, such as polypropylene, polybutylene terephthalate, and polybutylene succinate.

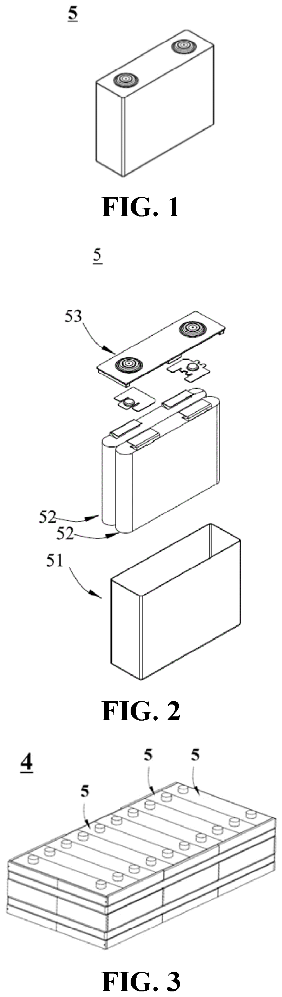

The sodium secondary battery in the present application can be cylindrical, square or in any other shape. For example, in FIG. 1, a sodium secondary battery 5 of a square structure is taken as an example.

In some embodiments, with reference to FIG. 2, the outer package can include a case 51 and a cover plate 53. The case 51 may include a bottom plate and a side plate connected to the bottom plate, which enclose to form an accommodating cavity. The case 51 has an opening that communicates with the accommodating cavity, and the cover plate 53 may cover the opening to close the accommodating cavity. The positive electrode plate, the negative electrode plate, and the separator may be formed into an electrode assembly 52 by a winding process or a stacking process. The electrode assembly 52 is encapsulated within the accommodating cavity. An electrolyte infiltrates the electrode assembly 52. One or more electrode assemblies 52 are in the sodium secondary battery 5, and the number can be selected by those skilled in the art according to specific actual requirements.

In some embodiments, the sodium secondary battery can be assembled into the battery module, one or more sodium secondary batteries are in the battery module, and the specific number can be selected by those skilled in the art according to the application and the capacity of the battery module.

In FIG. 3, a battery module 4 is taken as an example. With reference to FIG. 3, in the battery module 4, a plurality of sodium secondary batteries 5 can be sequentially arranged in the length direction of the battery module 4. Definitely, they can also be arranged according to any other mode. Further, the plurality of sodium secondary batteries 5 can be further fixed by fasteners.

Optionally, the battery module 4 can also include a shell with an accommodating space, and the plurality of sodium secondary batteries 5 are accommodated in the accommodating space.

In some examples, the battery modules can also be assembled into a battery pack, one or more battery modules can be in the battery pack, and the specific number can be selected by those skilled in the art according to the application and the capacity of the battery pack.

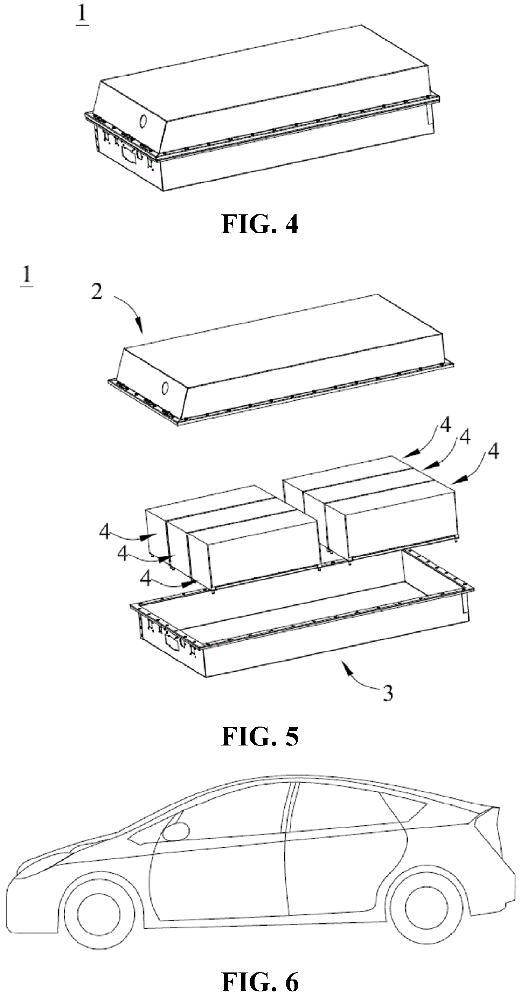

Figs. 4 and 5 show a battery pack 1 as an example. Referring to Figs. 4 and 5, the battery pack 1 may include a battery box and a plurality of battery modules 4 provided in the battery box. The battery box includes an upper box 2 and a lower box 3, wherein the upper box 2 can cover the lower box 3 and forms an enclosed space for accommodating the battery module 4. The plurality of battery modules 4 can be arranged in the battery box in any mode.

In addition, the present application further provides an electrical apparatus, and the electrical apparatus includes at least one of the sodium secondary battery, the battery module, or the battery pack provided by the present application. The sodium secondary battery, the battery module or the battery pack can be used as a power supply for the electrical apparatus and can also be used as an energy storage unit for the electrical apparatus. The electrical apparatus can include a mobile device (such as a mobile phone, and a notebook computer), an electric vehicle (such as a pure electric vehicle, a hybrid electric vehicle, a plug-in hybrid electric vehicle, an electric bicycle, an electric scooter, an electric golf cart, and an electric truck), an electric train, a ship, a satellite, an energy storage system and the like, but not limited thereto.

For the electrical apparatus, the sodium secondary battery, the battery module or the battery pack can be selected according to the use requirements.

FIG. 6 shows an electrical apparatus taken as an example. The electrical apparatus is the pure electric vehicle, the hybrid electric vehicle, the plug-in hybrid electric vehicle or the like. In order to meet the requirements of the electrical apparatus on high power and high energy density of the sodium secondary battery, the battery pack or the battery module can be adopted.

The apparatus serving as another example can be the mobile phone, tablet, laptop, etc. The device is generally required to be light and thin, so the sodium secondary battery can be adopted as the power supply.

### Examples

Examples of the present application will be described below. The Examples described below are illustrative and only used to explain the present application, and cannot be construed as limiting the present application. In Examples in which no specific technologies or conditions are specified, technologies or conditions described in the literature in the art or product specifications are followed. Where manufacturers are not specified, the reagents or instruments used are conventional products and are commercially available.

### I. Preparation method

### Example 1

### 1) Electrolyte solution

In a glove box with an argon atmosphere (H₂O content<10 ppm, O₂ content<1 ppm), propylene carbonate (PC) and ethyl methyl carbonate (EMC) are mixed at a mass ratio of 30/70 and dissolved with 1 M of NaPF₆ sodium salt; then, the compound of the first additive having the structure as shown in the Formula I-8 and the second additive sodium fluorosulfonate are added and stirred evenly to prepare the electrolyte solution. Based on the total mass of the electrolyte solution, the mass content of the compound of the first additive having the structure as shown in Formula I-1 is 0.01%, and the mass content of the second additive sodium fluorosulfonate is 0.5%.

### 2) Preparation of positive electrode sheet

Preparation of Na_{7/9}Cu_{2/9}Fe_{1/9}Mn_{2/3}O₂ (13% of Cu): 0.39 M of Na₂CO₃, 0.22 M of CuO, 0.06 mol of Fe₂O₃, and 0.67 M of MnO₂ precursors are milled by a ball mill using ethanol as a dispersant for 12 h; after being dried, the uniformly mixed powder is pressed into tablets at 20 MPa and sintered at 900°C for 12 h; and it is needed to quickly transfer the sintered powder to the glove box for storage;
the positive electrode active material Na_{7/9}Cu_{2/9}Fe_{1/9}Mn_{2/3}O₂, the conductive agent acetylene black, and the binder polyvinylidene fluoride (PVDF) were mixed at a weight ratio of 90:5:5 in the N-methyl-2-pyrrolidone solvent system, and were stirred thoroughly to obtain the positive electrode slurry; the positive electrode slurry was uniformly coated at an amount of 0.28 g (dry weight)/1,540.25 mm² on the aluminum foil being 13 µm in thickness and serving as the positive electrode current collector; and after being air-dried at room temperature, the aluminum foil was transferred to a 120°C oven and dried for 1 h, and then was subjected to cold pressing and slitting to obtain the positive electrode plate.

### 3) Preparation of negative electrode plate

Negative electrode active material H2 (negative electrode plate capacity within a charge range of 0.5-1 V was 40 mAh/g): the biomass materials were calcined at 800°C for 2 h in the tube furnace with the argon atmosphere, and then were washed with hydrochloric acid and deionized water and dried; after being ground, the biomass materials were calcined at 1550°C for 4 h in the tube furnace with the argon atmosphere to obtain the negative electrode active material H2;
the negative electrode active material H2, the conductive agent acetylene black, the binder styrene-butadiene rubber (SBR), the thickener sodium carboxymethyl cellulose (CMC-Na), and CaO were fully uniformly mixed in a mass ratio of 89.987:3.999:4:2:0.014 by stirring in the deionized water solvent system to obtain the negative electrode slurry; the negative electrode slurry was uniformly coated at 0.14 g (dry weight)/1,540.25 mm² onto the copper foil being 8 µm in thickness and serving as a negative electrode current collector; and after being air-dried at room temperature, the copper foil was transferred to a 120°C oven and dried for 1 h, then was subjected to cold pressing and slitting to obtain the negative electrode plate.

### 4) Separator

A 12 µm polyethylene (PE) porous polymer film is used as a separator.

### 5) Preparation of battery

The positive electrode plate, the separator, and the negative electrode plate are stacked in sequence, the separator is between the positive electrode plate and the negative electrode plate so as to isolate the positive electrode plate from the negative electrode plate; and then positive electrode plate, the separator, and the negative electrode plate are wound to obtain a bare cell; tabs are welded, the bare cell is placed in an outer package, the prepared electrolyte solution is injected into the dried cell, and then the processes of sealing, standing, formation, shaping, and capacity testing are carried out to obtain the sodium secondary battery product in an Example 1.

The secondary batteries in Examples 2 to 41 and the secondary batteries in Contrast Examples 1 to 4 are prepared by methods similar to the secondary battery in an Example 1, but composition of battery electrode plates and product parameters were adjusted; and different product parameters are shown in Tables 1 to 3;
in the Examples 2 to 11 and 18 to 22, the mass contents of the first additive, the second additive, and the third additive can be adjusted by adjusting the content of solvents in the electrolyte solution;
in the Examples 30 to 33, the negative electrode material layers containing different mass contents of the Ca element can be regulated by adding CaO with different mass contents during the negative electrode plate preparation process;
in the Examples 34 to 37, the capacity of the negative electrode plate can be effectively regulated by changing the carbonization temperature of the negative electrode material during the preparation process and by blending negative electrode materials with different capacities, as follows:
   negative electrode active material H1 (negative electrode plate capacity within a charge range of 0.5-1 V was 140 mAh/g): the biomass materials were calcined at 800°C for 2 h in the tube furnace with the argon atmosphere, and then were washed with hydrochloric acid and deionized water and dried; after being ground, the biomass materials were calcined at 1,150°C for 2 h in the tube furnace with the argon atmosphere to obtain the negative electrode active material H1;
   negative electrode active material H3 (capacity of negative electrode plate in the charge range of 0.5-1 V was 9 mAh/g): the biomass materials were calcined in a tube furnace with an argon atmosphere at 800°C for 2 h and then washed with hydrochloric acid and deionized water and dried; and after being ground, the biomass materials were calcined again in the tube furnace with the argon atmosphere at 1,650°C for 6 h to obtain the target material; the pyrolysis temperature was increased, thus further reducing defects and inducing the formation of a large number of ordered micropores; and the specific capacity in 0.5-1 V range was about 9 mAh/g.

Example 34: the negative electrode active material H3, the conductive agent acetylene black, the binder styrene-butadiene rubber (SBR), the thickener sodium carboxymethyl cellulose (CMC-Na), and CaO were fully uniformly mixed in a mass ratio of 90:4:4:2:0.014 by stirring in the deionized water solvent system to obtain the negative electrode slurry; the negative electrode slurry was uniformly coated at 0.14 g (dry weight)/1,540.25 mm² onto the copper foil being 8 µm in thickness and serving as a negative electrode current collector; and after being air-dried at room temperature, the copper foil was transferred to a 120°C oven and dried for 1 h, then was subjected to cold pressing and slitting to obtain the negative electrode plate.

Example 35: the negative electrode active materials (70% of H3 and 30% of H2), the conductive agent acetylene black, the binder styrene-butadiene rubber (SBR), the thickener sodium carboxymethyl cellulose (CMC-Na), and CaO were fully uniformly mixed in a mass ratio of 90:4:4:2:0.014 by stirring in the deionized water solvent system to obtain the negative electrode slurry; the negative electrode slurry was uniformly coated at 0.14 g (dry weight)/1,540.25 mm² onto the copper foil being 8 µm in thickness and serving as a negative electrode current collector; and after being air-dried at room temperature, the copper foil was transferred to a 120°C oven and dried for 1 h, then was subjected to cold pressing and slitting to obtain the negative electrode plate.

Example 36: the negative electrode active material (30% of H1 and 70% of H2), the conductive agent acetylene black, the binder styrene-butadiene rubber (SBR), the thickener sodium carboxymethyl cellulose (CMC-Na), and CaO were fully uniformly mixed in a mass ratio of 90:4:4:2:0.014 by stirring in the deionized water solvent system to obtain the negative electrode slurry; the negative electrode slurry was uniformly coated at 0.14 g (dry weight)/1,540.25 mm² onto the copper foil being 8 µm in thickness and serving as a negative electrode current collector; and after being air-dried at room temperature, the copper foil was transferred to a 120°C oven and dried for 1 h, then was subjected to cold pressing and slitting to obtain the negative electrode plate.

Example 37: the negative electrode active material H1, the conductive agent acetylene black, the binder styrene-butadiene rubber (SBR), the thickener sodium carboxymethyl cellulose (CMC-Na), and CaO were fully uniformly mixed in a mass ratio of 90:4:4:2:0.014 by stirring in the deionized water solvent system to obtain the negative electrode slurry; the negative electrode slurry was uniformly coated at 0.14 g (dry weight)/1,540.25 mm² onto the copper foil being 8 µm in thickness and serving as a negative electrode current collector; and after being air-dried at room temperature, the copper foil was transferred to a 120°C oven and dried for 1 h, then was subjected to cold pressing and slitting to obtain the negative electrode plate.
in the Example 38 to 41, the positive electrode active material containing different mass content of the Cu element can be regulated by regulating the stoichiometric ratio of the precursors Fe₂O₃, CuO, MnO₂, and Na₂CO₃ during the sintering process and by blending the positive electrode active materials with different content of the Cu element during the positive electrode plate preparation process, as follows:
preparation of Na_{1/2}Fe_{1/2}Mn_{1/2}O₂ (0% of Cu): 0.25 M of Na₂CO₃, 0.25 M of Fe₂O₃, and 0.5 M of MnO₂ precursors were milled by the ball mill using ethanol as the dispersant for 12 h; after being dried, the uniformly mixed powder was pressed into tablets at 20 MPa and sintered at 900°C for 12 h; and it was needed to quickly transfer the sintered powder to the glove box for storage;
preparation of Na_{9/10}Cu_{2/5}Fe_{1/10}Mn_{1/2}O₂ (23% of Cu): 0.45 M of Na₂CO₃, 0.4 M of CuO, 0.05 M of Fe₂O₃, and 0.5 M of MnO₂ precursors were milled by the ball mill using ethanol as the dispersant for 12 h; after being dried, the uniformly mixed powder was pressed into tablets at 20 MPa and sintered at 900°C for 12 h; and it was needed to quickly transfer the sintered powder to the glove box for storage.

Example 38: the positive electrode active material Na_{1/2}Fe_{1/2}Mn_{1/2}O₂, the conductive agent acetylene black, and the binder polyvinylidene fluoride (PVDF) were mixed at a weight ratio of 90:5:5 in the N-methyl-2-pyrrolidone solvent system, and were stirred thoroughly to obtain the positive electrode slurry; the positive electrode slurry was uniformly coated at an amount of 0.28 g (dry weight)/1,540.25 mm² on the aluminum foil being 13 µm in thickness and serving as the positive electrode current collector; and after being air-dried at room temperature, the aluminum foil was transferred to a 120°C oven and dried for 1 h, and then was subjected to cold pressing and slitting to obtain the positive electrode plate.

Example 39: the positive electrode active materials (50% of Na_{1/2}Fe_{1/2}Mn_{1/2}O₂ and 50% of Na_{7/9}Cu_{2/9}Fe_{1/9}Mn_{2/3}O₂), the conductive agent acetylene black, and the binder polyvinylidene fluoride (PVDF) were mixed at a weight ratio of 90:5:5 in the N-methyl-2-pyrrolidone solvent system, and were stirred thoroughly to obtain the positive electrode slurry; the positive electrode slurry was uniformly coated at an amount of 0.28 g (dry weight)/1,540.25 mm² on the aluminum foil being 13 µm in thickness and serving as the positive electrode current collector; and after being air-dried at room temperature, the aluminum foil was transferred to a 120°C oven and dried for 1 h, and then was subjected to cold pressing and slitting to obtain the positive electrode plate.

Example 40: the positive electrode active materials (50% of Na_{7/9}Cu_{2/9}Fe_{1/9}Mn_{2/3}O₂ and 50% of Na_{9/10}Cu_{2/5}Fe_{1/10}Mn_{1/2}O₂), the conductive agent acetylene black, and the binder polyvinylidene fluoride (PVDF) were mixed at a weight ratio of 90:5:5 in the N-methyl-2-pyrrolidone solvent system, and were stirred thoroughly to obtain the positive electrode slurry; the positive electrode slurry was uniformly coated at an amount of 0.28 g (dry weight)/1,540.25 mm² on the aluminum foil being 13 µm in thickness and serving as the positive electrode current collector; and after being air-dried at room temperature, the aluminum foil was transferred to a 120°C oven and dried for 1 h, and then was subjected to cold pressing and slitting to obtain the positive electrode plate.

Example 41: the positive electrode active material Na_{9/10}Cu_{2/5}Fe_{1/10}Mn_{1/2}O₂, the conductive agent acetylene black, and the binder polyvinylidene fluoride (PVDF) were mixed at a weight ratio of 90:5:5 in the N-methyl-2-pyrrolidone solvent system, and were stirred thoroughly to obtain the positive electrode slurry; the positive electrode slurry was uniformly coated at an amount of 0.28 g (dry weight)/1,540.25 mm² on the aluminum foil being 13 µm in thickness and serving as the positive electrode current collector; and after being air-dried at room temperature, the aluminum foil was transferred to a 120°C oven and dried for 1 h, and then was subjected to cold pressing and slitting to obtain the positive electrode plate.

### II. Performance test

### 1. Electrolyte solution

### 1) Test of mass content of first additive

The first additive can be detected with reference to qualitative and quantitative testing through organic component gas chromatography in GB/T 6041-2002 and GB/T 9722-2006.

### 2) Test of mass content of second additive

The second additive can be detected with reference to the ion chromatography analysis method stipulated in the General Rules for Modern Analytical Instrument Analysis Methods (JY/T 020-1996, issued on January 23, 1997, implemented on April 1, 1997), and ion chromatography analysis can be utilized to test the composition and content.

### 3) Test of mass content of third additive

The third additive can be detected with reference to qualitative and quantitative testing through organic component gas chromatography in GB/T 6041-2002 and GB/T 9722-2006.

### 2. Negative electrode plate/ positive electrode plate

### 1). Determination of content of element Ca in negative electrode material layer

The content of the Ca element in the negative electrode material can be tested with reference to General Rule EPA 6010D-2014, and inductively coupled plasma atomic emission spectroscopy is utilized to test.

### 2). Determination of content of element Cu in positive electrode active material

The content of the Cu element in the positive electrode active material can be tested with reference to General Rule EPA 6010D-2014, and inductively coupled plasma atomic emission spectroscopy is utilized to test.

### 3) Capacity test of negative electrode plate in range of 0.5-1 V

The negative electrode plates were punched into small wafers with a diameter of 14 mm; metallic sodium plates were treated as the negative electrodes, polypropylene films were treated as the separators, and 1.3 mol/L of sodium hexafluorophosphate solution was treated as the electrolyte solution; the solvent in the electrolyte solution included ethylene carbonate, dimethyl carbonate, and ethyl methyl carbonate with a mass ratio of 1:2:2, the electrolyte solution was used as a testing electrolyte solution, and the button cell was assembled; the button cell was subjected to charge-discharge test within a voltage range of 0.005-2 V under constant current; during discharging, the button cell was discharged to 0.005 V at a rate of 0.05 C, 40 µA, and 10 µA in sequence under constant current; during charging, the button cell was charged to 2 V at a rate of 0.05 C under constant current; and the specific capacity (mAh/g) of 0.5-1 V in charging was recorded as the capacity of the negative electrode active material within 0.5-1 V.

### 3. Battery

### 1). Volume change rate in low-pressure storage

At 25°C, new sodium secondary batteries prepared in the examples and the contrast examples were stood for 5 min and then were charged to 4.0V at a rate of 1 under constant current; then the sodium secondary batteries were charged at constant voltage charging until the current was less than or equal to 0.05 C and then were stood for 5 min and finally were discharged to 1.5 V at a rate of 1 C under constant current; the battery volume V1 was measured by a water drainage method; then the battery was placed in a 60°C oven for storage for 2 months; the battery was taken out, the volume was tested as V2, and the battery volume change rate was = (V2 - V1) / V1 × 100%.

### 2) Charge performance at -10°C

Preparation of three-electrode battery: a sodium vanadium phosphate reference electrode was prepared firstly; the active material sodium vanadium phosphate, the conductive agent acetylene black, and the binder polyvinylidene fluoride (PVDF) were uniformly mixed by fully stirring at a weight ratio of 90:5:5 in an N-methyl-2-pyrrolidone solvent system to obtain a slurry; the slurry was uniformly coated onto an aluminum wire being 10 cm in length (coated area covering 1 cm), and dried at 100°C to obtain the target reference electrode; and during the preparation of the sodium secondary battery, the above reference electrode was placed between the negative electrode and the separator to obtain the three-electrode battery.

Charge performance test at -10°C: at 25°C, the battery was charged at a rate of 0.1 C under constant current until the voltage reached 4.0V and then charged at constant voltage until the current was less than or equal to 0.05 C; then the battery was stood for 5 min and then discharged to 1.5 V at a rate of 0.1 C under constant current, and the discharge capacity was recorded as C1; then, the battery was placed in an environment at -10°C and stood for 2 h; the battery was charged at a rate of 0.1 C under constant current until the voltage reached 4.0 V, and the charge capacity before the negative electrode potential relative to the reference reached -3.377 V was recorded as C2; and the charge performance of the battery at -10°C was = C2/C1 × 100%.

### 3) DC impedance

At -25°C, the state of charge of a battery cell was adjusted to 50% SOC and stood for 30 min, and the battery voltage at this time was recorded as U1(V); the battery cell was discharged at 0.36 C for 10 sec, and the battery voltage at this time was recorded as U 2(V); and the corresponding battery discharge current I(mA) was 0.36 x battery rated capacity (mAh). The DC impedance was DCR(mΩ)=(U1-U2)/I.

### 4) Cycling performance

At 25°C, the prepared battery was charged to 4.0 V at a rate of 0.5 C under constant current and then charged at a constant voltage of 4.0 V until the current dropped to 0.05 C, and after being stood for 10 min, the battery was discharged to 1.5 V at a rate of 1C under constant current, and such operation was the first charge-discharge cycle of the battery, and the discharge capacity in this cycle was recorded as the discharge capacity (C0) of the battery in the first cycle; the above steps were repeated for the same battery, and after the 300th cycle, the discharge capacity (C1) of the battery was measured; and the capacity retention after 300 cycles was = C1/C0 × 100%. The testing process for the contrast examples and other examples is the same as above.

### III. Analysis of test results of each example and contrast example

The batteries in each example and contrast example were prepared respectively according to the above method, and various performance parameters were measured. The results are shown in Tables 1-4 below.

**Table 1 Preparation parameter table**

| No. | Electrolyte solution | | | | |
|---|---|---|---|---|---|
| | First additive | | Second additive | | Mass ratio of first additive to second additive |
| | Materials | Mass content/% | Materials | Mass content/% | |
| Example 1 | Formula I-8 | 0.01 | Sodium fluorosulfonate | 0.5 | 0.02 |
| Example 2 | Formula I-8 | 0.1 | Sodium fluorosulfonate | 0.5 | 0.2 |
| Example 3 | Formula I-8 | 1 | Sodium fluorosulfonate | 0.5 | 2 |
| Example 4 | Formula I-8 | 2 | Sodium fluorosulfonate | 0.5 | 4 |
| Example 5 | Formula I-8 | 5 | Sodium fluorosulfonate | 0.5 | 10 |
| Example 6 | Formula I-8 | 1 | Sodium fluorosulfonate | 0.005 | 200 |
| Example 7 | Formula I-8 | 1 | Sodium fluorosulfonate | 0.1 | 10 |
| Example 8 | Formula I-8 | 1 | Sodium fluorosulfonate | 2 | 0.5 |
| Example 9 | Formula I-8 | 1 | Sodium fluorosulfonate | 5 | 0.2 |
| Example 10 | Formula I-8 | 1 | Sodium fluorosulfonate | 0.01 | 100 |
| Example 11 | Formula I-8 | 1 | Sodium difluorophosphate | 0.5 | 2 |
| Example 12 | Formula I-1 | 1 | Sodium difluorophosphate | 0.5 | 2 |
| Example 13 | Formula I-17 | 1 | Sodium fluorosulfonate | 0.5 | 2 |
| Example 14 | Formula I-26 | 1 | Sodium fluorosulfonate | 0.5 | 2 |
| Example 15 | Formula I-33 | 1 | Sodium fluorosulfonate | 0.5 | 2 |
| Example 16 | Formula I-8 | 1 | Lithium difluorophosphate | 0.5 | 2 |
| Example 17 | Formula I-8 | 1 | Aluminum fluorosulfonate | 0.5 | 2 |
| Example 18 | Formula I-8 | 1 | Sodium difluorophosphate | 0.5 | 2 |
| Example 19 | Formula I-8 | 1 | Sodium difluorophosphate | 0.5 | 2 |
| Example 20 | Formula I-8 | 1 | Sodium difluorophosphate | 0.5 | 2 |
| Example 21 | Formula I-8 | 1 | Sodium difluorophosphate | 0.5 | 2 |
| Example 22 | Formula I-8 | 1 | Sodium difluorophosphate | 0.5 | 2 |
| Example 23 | Formula I-8 | 1 | Sodium fluorosulfonate | 0.5 | 2 |
| Example 24 | Formula I-8 | 1 | Sodium difluorophosphate | 0.5 | 2 |
| Example 25 | Formula I-8 | 1 | Sodium fluorosulfonate | 0.5 | 2 |
| Example 26 | Formula I-8 | 1 | Sodium difluorophosphate | 0.5 | 2 |
| Example 27 | Formula I-8 | 1 | Sodium difluorophosphate | 0.5 | 2 |
| Example 28 | Formula I-8 | 1 | Sodium difluorophosphate | 0.5 | 2 |
| Example 29 | Formula I-8 | 1 | Sodium difluorophosphate | 0.5 | 2 |
| Example 30 | Formula I-8 | 1 | Sodium difluorophosphate | 0.5 | 2 |
| Example 31 | Formula I-8 | 1 | Sodium difluorophosphate | 0.5 | 2 |
| Example 32 | Formula I-8 | 1 | Sodium difluorophosphate | 0.5 | 2 |
| Example 33 | Formula I-8 | 0.3 | Sodium difluorophosphate | 0.5 | 0.6 |
| Example 34 | Formula I-8 | 1 | Sodium difluorophosphate | 0.5 | 2 |
| Example 35 | Formula I-8 | 1 | Sodium difluorophosphate | 0.5 | 2 |
| Example 36 | Formula I-8 | 1 | Sodium difluorophosphate | 0.5 | 2 |
| Example 37 | Formula I-8 | 1 | Sodium difluorophosphate | 0.5 | 2 |
| Example 38 | Formula I-8 | 1 | Sodium difluorophosphate | 0.5 | 2 |
| Example 39 | Formula I-8 | 1 | Sodium difluorophosphate | 0.5 | 2 |
| Example 40 | Formula I-8 | 1 | Sodium difluorophosphate | 0.5 | 2 |
| Example 41 | Formula I-8 | 1 | Sodium difluorophosphate | 0.5 | 2 |
| Contrast Example 1 | / | / | / | / | / |
| Contrast Example 2 | Formula I-8 | 1 | / | / | / |
| Contrast Example 3 | / | / | Sodium fluorosulfonate | 0.5 | / |
| Contrast Example 4 | / | / | Sodium difluorophosphate | 0.5 | / |

**Table 2 Preparation parameter table**

| No. | Electrolyte solution | | | |
|---|---|---|---|---|
| | Third additive | | Sodium salt | Solvent |
| | Materials | Mass content/% | | |
| Example 1 | / | / | NaPF₆ | PC+EMC (mass ratio: 3:7) |
| Example 2 | / | / | NaPF₆ | PC+EMC (mass ratio: 3:7) |
| Example 3 | / | / | NaPF₆ | PC+EMC (mass ratio: 3:7) |
| Example 4 | / | / | NaPF₆ | PC+EMC (mass ratio: 3:7) |
| Example 5 | / | / | NaPF₆ | PC+EMC (mass ratio: 3:7) |
| Example 6 | / | / | NaPF₆ | PC+EMC (mass ratio: 3:7) |
| Example 7 | / | / | NaPF₆ | PC+EMC (mass ratio: 3:7) |
| Example 8 | / | / | NaPF₆ | PC+EMC (mass ratio: 3:7) |
| Example 9 | / | / | NaPF₆ | PC+EMC (mass ratio: 3:7) |
| Example 10 | / | / | NaPF₆ | PC+EMC (mass ratio: 3:7) |
| Example 11 | / | / | NaPF₆ | PC+EMC (mass ratio: 3:8) |
| Example 12 | / | / | NaPF₆ | PC+EMC (mass ratio: 3:7) |
| Example 13 | / | / | NaPF₆ | PC+EMC (mass ratio: 3:7) |
| Example 14 | / | / | NaPF₆ | PC+EMC (mass ratio: 3:7) |
| Example 15 | / | / | NaPF₆ | PC+EMC (mass ratio: 3:7) |
| Example 16 | / | / | NaPF₆ | PC+EMC (mass ratio: 3:7) |
| Example 17 | / | / | NaPF₆ | PC+EMC (mass ratio: 3:7) |
| Example 18 | FEC | 1 | NaPF₆ | PC+EMC (mass ratio: 3:7) |
| Example 19 | FEC | 0.01 | NaPF₆ | PC+EMC (mass ratio: 3:7) |
| Example 20 | FEC | 0.1 | NaPF₆ | PC+EMC (mass ratio: 3:7) |
| Example 21 | FEC | 5 | NaPF₆ | PC+EMC (mass ratio: 3:7) |
| Example 22 | FEC | 10 | NaPF₆ | PC+EMC (mass ratio: 3:7) |
| Example 23 | VC | 1 | NaPF₆ | PC+EMC (mass ratio: 3:7) |
| Example 24 | VEC | 1 | NaPF₆ | PC+EMC (mass ratio: 3:7) |
| Example 25 | Maleic anhydride | 1 | NaPF₆ | PC+EMC (mass ratio: 3:7) |
| Example 26 | / | / | NaFSI | PC+EMC (mass ratio: 3:7) |
| Example 27 | / | / | NaFSI+NaPF₆ (molar ratio: 1:1) | PC+EMC (mass ratio: 3:7) |
| Example 28 | / | / | NaPF₆ | PC+EMC+DG (mass ratio: 2:6:2) |
| Example 29 | / | / | NaPF₆ | PC+EMC+EP (mass ratio: 2:6:2) |
| Example 30 | / | / | NaPF₆ | PC+EMC (mass ratio: 3:7) |
| Example 31 | / | / | NaPF₆ | PC+EMC (mass ratio: 3:7) |
| Example 32 | / | / | NaPF₆ | PC+EMC (mass ratio: 3:7) |
| Example 33 | / | / | NaPF₆ | PC+EMC (mass ratio: 3:7) |
| Example 34 | / | / | NaPF₆ | PC+EMC (mass ratio: 3:7) |
| Example 35 | / | / | NaPF₆ | PC+EMC (mass ratio: 3:7) |
| Example 36 | / | / | NaPF₆ | PC+EMC (mass ratio: 3:7) |
| Example 37 | / | / | NaPF₆ | PC+EMC (mass ratio: 3:7) |
| Example 38 | / | / | NaPF₆ | PC+EMC (mass ratio: 3:7) |
| Example 39 | / | / | NaPF₆ | PC+EMC (mass ratio: 3:7) |
| Example 40 | / | / | NaPF₆ | PC+EMC (mass ratio: 3:7) |
| Example 41 | / | / | NaPF₆ | PC+EMC (mass ratio: 3:7) |
| Contrast Example 1 | / | / | NaPF₆ | PC+EMC (mass ratio: 3:7) |
| Contrast Example 2 | / | / | NaPF₆ | PC+EMC (mass ratio: 3:7) |
| Contrast Example 3 | / | / | NaPF₆ | PC+EMC (mass ratio: 3:7) |
| Contrast Example 4 | / | / | NaPF₆ | PC+EMC (mass ratio: 3:7) |

**Table 3 Preparation parameter table**

| No. | Negative electrode sheet | | | Positive electrode plate | |
|---|---|---|---|---|---|
| | Mass content of Ca/ppm | Ratio of content mass of first additive to content mass of Ca | Capacity in range of 0.5-1 V/(mAh/g) | Mass content of Cu/% | Ratio of content mass of first additive to content mass of Cu |
| Example 1 | 100 | 1 | 40 | 13 | 0.0008 |
| Example 2 | 100 | 10 | 40 | 13 | 0.0077 |
| Example 3 | 100 | 100 | 40 | 13 | 0.0769 |
| Example 4 | 100 | 200 | 40 | 13 | 0.1538 |
| Example 5 | 100 | 500 | 40 | 13 | 0.3846 |
| Example 6 | 100 | 100 | 40 | 13 | 0.0769 |
| Example 7 | 100 | 100 | 40 | 13 | 0.0769 |
| Example 8 | 100 | 100 | 40 | 13 | 0.0769 |
| Example 9 | 100 | 100 | 40 | 13 | 0.0769 |
| Example 10 | 100 | 100 | 40 | 13 | 0.0769 |
| Example 11 | 100 | 100 | 40 | 13 | 0.0769 |
| Example 12 | 100 | 100 | 40 | 13 | 0.0769 |
| Example 13 | 100 | 100 | 40 | 13 | 0.0769 |
| Example 14 | 100 | 100 | 40 | 13 | 0.0769 |
| Example 15 | 100 | 100 | 40 | 13 | 0.0769 |
| Example 16 | 100 | 100 | 40 | 13 | 0.0769 |
| Example 17 | 100 | 100 | 40 | 13 | 0.0769 |
| Example 18 | 100 | 100 | 40 | 13 | 0.0769 |
| Example 19 | 100 | 100 | 40 | 13 | 0.0769 |
| Example 20 | 100 | 100 | 40 | 13 | 0.0769 |
| Example 21 | 100 | 100 | 40 | 13 | 0.0769 |
| Example 22 | 100 | 100 | 40 | 13 | 0.0769 |
| Example 23 | 100 | 100 | 40 | 13 | 0.0769 |
| Example 24 | 100 | 100 | 40 | 13 | 0.0769 |
| Example 25 | 100 | 100 | 40 | 13 | 0.0769 |
| Example 26 | 100 | 100 | 40 | 13 | 0.0769 |
| Example 27 | 100 | 100 | 40 | 13 | 0.0769 |
| Example 28 | 100 | 100 | 40 | 13 | 0.0769 |
| Example 29 | 100 | 100 | 40 | 13 | 0.0769 |
| Example 30 | 50 | 200 | 40 | 13 | 0.0769 |
| Example 31 | 1000 | 10 | 40 | 13 | 0.0769 |
| Example 32 | 3000 | 3.333333333 | 40 | 13 | 0.0769 |
| Example 33 | 3000 | 1 | 40 | 13 | 0.0231 |
| Example 34 | 100 | 100 | 9 | 13 | 0.0769 |
| Example 35 | 100 | 100 | 18.3 | 13 | 0.0769 |
| Example 36 | 100 | 100 | 70 | 13 | 0.0769 |
| Example 37 | 100 | 100 | 140 | 13 | 0.0769 |
| Example 38 | 100 | 100 | 40 | 0 | / |
| Example 39 | 100 | 100 | 40 | 6.5 | 0.1538 |
| Example 40 | 100 | 100 | 40 | 18 | 0.0556 |
| Example 41 | 100 | 100 | 40 | 23 | 0.0435 |
| Contrast Example 1 | 100 | / | 40 | 13 | / |
| Contrast Example 2 | 100 | 100 | 40 | 13 | 0.0769 |
| Contrast Example 3 | 100 | / | 40 | 13 | / |
| Contrast Example 4 | 100 | / | 40 | 13 | / |

**Table 4 Performance test table**

| No. | Battery performance | | | |
|---|---|---|---|---|
| | Volume expansion rate after high-temperature storage at 60°C/% | Charge performance at - 10°C | DC impedance | Cycle performance |
| Example 1 | 25.9 | 81.8 | 1123 | 77.7 |
| Example 2 | 19.1 | 87.6 | 1041 | 81.4 |
| Example 3 | 11 | 91.2 | 920 | 90.2 |
| Example 4 | 10.8 | 90.6 | 953 | 89.3 |
| Example 5 | 12.7 | 87.4 | 1048 | 81.7 |
| Example 6 | 17.1 | 86.9 | 1050 | 81.4 |
| Example 7 | 17.2 | 88.6 | 1017 | 80.9 |
| Example 8 | 15.1 | 87.2 | 1068 | 84.8 |
| Example 9 | 14.9 | 86.9 | 1089 | 83.4 |
| Example 10 | 16.9 | 88.8 | 1040 | 81.6 |
| Example 11 | 11.4 | 90.5 | 951 | 89.7 |
| Example 12 | 11.7 | 90.1 | 962 | 89.2 |
| Example 13 | 11.3 | 90.7 | 925 | 89.8 |
| Example 14 | 11.2 | 90.8 | 923 | 90.1 |
| Example 15 | 12.5 | 89.2 | 946 | 87.2 |
| Example 16 | 11.3 | 90.6 | 962 | 90 |
| Example 17 | 11.8 | 89.4 | 967 | 88.2 |
| Example 18 | 9.4 | 92.5 | 911 | 92.4 |
| Example 19 | 11.1 | 90.7 | 942 | 89.9 |
| Example 20 | 10.8 | 90.9 | 934 | 90.1 |
| Example 21 | 10.6 | 90.8 | 941 | 90 |
| Example 22 | 10.5 | 90.6 | 948 | 89.9 |
| Example 23 | 10.2 | 91.6 | 917 | 90.8 |
| Example 24 | 10.5 | 91.4 | 918 | 90.5 |
| Example 25 | 10 | 91.8 | 915 | 90.9 |
| Example 26 | 10.9 | 91 | 937 | 90.6 |
| Example 27 | 11.1 | 90.8 | 941 | 90.3 |
| Example 28 | 11.8 | 90.2 | 978 | 89.4 |
| Example 29 | 11.5 | 90.6 | 952 | 89.8 |
| Example 30 | 11.6 | 90.1 | 962 | 89.5 |
| Example 31 | 11.2 | 90.6 | 978 | 88.3 |
| Example 32 | 11.4 | 81.6 | 1034 | 82.3 |
| Example 33 | 16.3 | 80 | 1079 | 80.1 |
| Example 34 | 15.4 | 82.7 | 967 | 80.5 |
| Example 35 | 11.1 | 90.3 | 942 | 89.8 |
| Example 36 | 14.2 | 90.7 | 963 | 88.1 |
| Example 37 | 17.7 | 88.1 | 978 | 82.7 |
| Example 38 | 10.8 | 90.8 | 935 | 89 |
| Example 39 | 11.1 | 90.2 | 946 | 89.4 |
| Example 40 | 12.4 | 89.9 | 967 | 90.4 |
| Example 41 | 14.4 | 89.1 | 989 | 90.6 |
| Contrast Example 1 | 42.3 | 75 | 1355 | 63.8 |
| Contrast Example 2 | 17.8 | 88.6 | 1020 | 80.8 |
| Contrast Example 3 | 27.3 | 81.1 | 1268 | 77.2 |
| Contrast Example 4 | 26.5 | 83.7 | 1260 | 79.3 |

In the Examples 1 to 41, the electrolyte solution in the sodium secondary battery includes both the first additive and the second additive; the first additive includes compounds having the structures shown in the Formula I-1, Formula I-8, Formula I-17, Formula I-26, or Formula I-33; and the second additive includes sodium fluorosulfonate, disodium difluorophosphate, lithium difluorophosphate, or aluminum fluorosulfonate.

The comparison between the Examples 1 to 17 and the Contrast Example 1 showed that the first additive and the second additive added to the electrolyte were conducive to reducing the volume expansion rate of the sodium secondary battery and the DC impedance of the sodium secondary battery after high-temperature storage, as well as improving the charge performance and cycle capacity retention rate of the sodium secondary battery.

The comparisons between the Examples 3, 6 to 10, 16 to 17 and the Contrast Example 2, between the Examples 1 to 5, 13 to 15 and the Contrast Example 3, and between the Examples 11 to 12 and the Contrast Example 4 showed that, compared with the electrolyte solution containing only the first additive or the second additive, the electrolyte solution in the present application containing both the first additive and the second additive was conductive to reducing the volume expansion rate of the sodium secondary battery after high-temperature storage, as well as improving the cycle capacity retention rate of the sodium secondary battery.

According to the Examples 1 to 10, by controlling the mass ratio of the compound of the first additive having the structure as shown in the Formula I-1 to the second additive sodium fluorosulfonate to 0.02-200, the sodium secondary battery achieved excellent storage performance, cycling performance, and charge performance. The comparison between the Examples 2 to 5, 7 to 10 and the Examples 1 and 6 showed that controlling the mass ratio of the compound of the first additive having the structure as shown in the Formula I-1 to the second additive sodium fluorosulfonate to 0.2-100 was conductive to achieving the storage performance, cycling performance, and charge performance of the sodium secondary battery.

According to the Examples 1 to 5, based on the total mass of the electrolyte solution, by controlling the mass content of the compound of the first additive having the structure as shown in the Formula I-1 to 0.01%-5%, the sodium secondary battery achieved excellent storage performance, cycling performance, and charge performance. The comparison between the Examples 2 to 4 and the Examples 1 and 5 showed that controlling the mass content of the compound of the first additive having the structure as shown in the Formula I-1 to 0.1%-2% was conductive to achieving the storage performance, cycling performance, and charge performance of the sodium secondary battery.

According to the Examples 3, and 6 to 10, based on the total mass of the electrolyte solution, by controlling the mass content of the second additive sodium fluorosulfonate to 0.001%-5%, the sodium secondary battery achieved excellent storage performance, cycle performance, and charge performance. The comparison between the Examples 3, 7 to 8 and the Examples 6, 9 to 10 showed that controlling the mass content of the second additive sodium fluorosulfonate to 0.1%-2% was conducive to achieving the storage performance, cycle performance, and charge performance of the sodium secondary battery.

According to the Examples 3 and 11 to 17, the first additive was selected from compounds having the structures shown in Formula I-1, Formula I-8, Formula I-17, Formula I-26 or Formula I-33, and the second additive is selected from sodium fluorosulfonate, sodium difluorophosphate, lithium difluorophosphate, or aluminum fluorosulfonate, and therefore, the sodium secondary battery achieved excellent storage performance, cycling performance, and charge performance.

The comparison between the Examples 18 to 22, 24 and the Example 11, and between the Examples 23 and 25 and the Example 3 showed that introducing of the third additive into the electrolyte solution and the third additive being the FEC, VC, VEC, or maleic anhydride were both conducive to reducing the DC impedance of the sodium secondary battery and the volume expansion rate of the sodium secondary battery after high-temperature storage, as well as improving the charge performance and cycle capacity retention rate of the sodium secondary battery.

According to Examples 18 to 22, based on the total mass of the electrolyte solution, by controlling the mass content of the third additive to 0.05%-10%, the sodium secondary battery achieved excellent storage performance, cycle performance, and charge performance. The comparison between the Examples 18, 20 to 21 and the Examples 19, 22 showed that controlling the mass content of the third additive to 0.1%-5% was conducive to achieving the storage performance, cycle performance, and charge performance of the sodium secondary battery.

According to the Examples 11, and 26 to 27, the lithium salt in the electrolyte solution was NaFSI and/or NaPF₆ and used in match with the first additive and the second additive to make the sodium secondary battery achieve excellent storage performance, cycling performance, and charge performance.

According to the Examples 11, and 27 to 29, the solvent in the electrolyte solution was two or more of PC, EMC, DG, and EP and was used in match with the first additive and the second additive to make the sodium secondary battery achieve excellent storage performance, cycling performance, and charge performance.

According to Examples 11, and 30 to 33, by controlling the mass ratio of the first additive in the electrolyte solution to the mass content of the Ca element in the negative electrode material layer to be greater than or equal to 1, the sodium secondary battery achieved excellent storage performance, cycling performance, and charge performance.

According to the Examples 11, and 30 to 33, by controlling the mass content of the Ca element in the negative electrode material layer to 50-3000 ppm and using in match with the first additive and the second additive, the sodium secondary battery achieved excellent storage performance, cycle performance, and charge performance. The comparison between the Examples 10, 30 to 31 and the Example 32, further controlling the mass content of the Ca element in the negative electrode material layer to 100-3000 ppm was beneficial for further reducing the DC impedance of the sodium secondary battery and improving the charge performance and cycle capacity retention rate of the sodium secondary battery.

According to the Examples 11, 34 to 37, at a charge rate of 0.05 C, by controlling the capacity of the negative electrode plate in the charge range of 0.5-1 V to 9-140 mAh/g, the sodium secondary battery achieved excellent storage performance, cycle performance, and charge performance. The comparison between the Examples 11, 35 to 36 and the Examples 34 and 37 showed that further controlling the capacity of the negative electrode plate to 18-70 mAh/g in the charge range of 0.5-1 V was beneficial to further reducing the DC impedance of the sodium secondary battery and the volume expansion rate after high-temperature storage, thereby improving the charge performance and cycle capacity retention rate of the sodium secondary battery.

The comparison between the Examples 11, 39 to 41 and the Example 38 showed that introducing Cu element into the positive electrode active material improved the cycle capacity retention rate of the sodium secondary battery.

According to the Examples 11 and 39 to 41, by controlling the ratio of the mass content of the first additive in the electrolyte solution to the mass content of the Cu element in the positive electrode active material to be greater than 0.002, the sodium secondary battery achieved excellent storage performance, cycling performance, and charge performance.

According to the Examples 11 and 39 to 41, by controlling the mass content of the Cu element in the positive electrode active material to be less than or equal to 23%, the sodium secondary battery achieved excellent storage performance, cycling performance, and charge performance. The comparison between the Examples 11, 39 to 40 and the Example 41 showed that further controlling the mass content of the Cu element in the positive electrode active material to 6.5%-18% was conductive to achieving the storage performance, cycling performance, and charge performance of the sodium secondary battery.

It is to be noted that the present application is not limited to the above embodiments. The above embodiments are only examples, and embodiments that have the same composition and exert the same effect as the technical ideas within the scope of the technical solution of the present application are included in the technical scope of the present application. In addition, other methods that apply various deformations that can be conceived by those skilled in the art to the examples and construct them by combining some of the constituent elements of the embodiments are also included in the scope of the present application, within the scope of the application that do not deviate from the main purpose of the present application.

## Claims

1. An electrolyte solution applied to a sodium secondary battery, comprising a first additive and a second additive, wherein the first additive comprises a cyclic ester compound containing a sulfur element, and the second additive comprises one or more selected from the group consisting of fluorosulfonate and difluorophosphate; the cyclic ester compound comprises a compound having the structure shown in an Formula I, 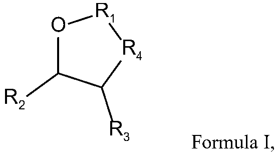 in the Formula I, R₁ includes 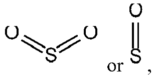 R₂ and R₃ each independently comprise at least one selected from the group consisting of a hydrogen atom, a C1-C6 alkyl group, a C1-C3 haloalkyl group, a C1-C3 alkoxy group, a C1-C3 haloalkoxy group, a C1-C3 alkenyl group, an ester group, a cyano group, and a sulfonic acid group; and R₄ comprises at least one selected from the group consisting of an oxygen atom, a C1-C6 alkyl group, a C1-C3 haloalkyl group, a C1-C3 alkoxy group, and a C1-C3 haloalkoxy group.

2. The electrolyte solution according to claim 1, wherein in the Formula I, R₂ and R₃ each independently comprise at least one selected from the group consisting of the hydrogen atom, the C1-C6 alkyl group, the C1-C3 haloalkyl group, or the C1-C3 alkenyl group; and R₄ comprises at least one selected from the group consisting of the oxygen atom, the C1-C6 alkyl group, the C1-C3 haloalkyl group, the C1-C3 alkoxy group, or the C1-C3 haloalkoxy group.

3. The electrolyte solution according to claim 1, wherein the structure shown in the Formula I comprises at least one selected from the group consisting of

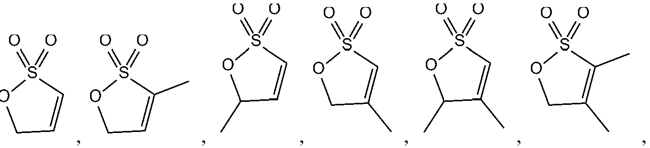

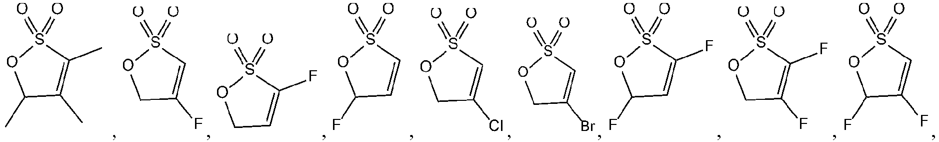

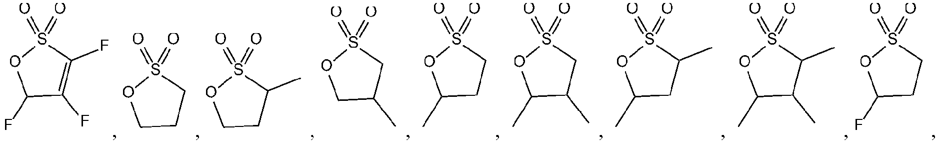

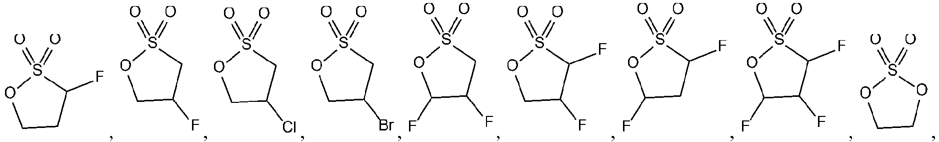

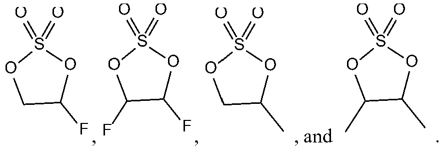

4. The electrolyte solution according to claim 1, wherein the fluorosulfonate comprises a compound shown in a Formula II,
(FSO₃)_{y1}M1^{y1+} Formula II
in the Formula II, M1^{y1+} comprises one or more selected from the group consisting of Li⁺, Na⁺, K⁺, Rb⁺, Cs⁺, Mg²⁺, Ca²⁺, Ba²⁺, Fe²⁺, Ni²⁺, Al³⁺, Fe³⁺, and Ni³⁺; and y1=1, 2, or 3.

5. The electrolyte solution according to claim 1, wherein the difluorophosphate comprises a compound shown in a Formula III,
(PO₂F₂)_{y2}M2^{y2+} Formula III
in the Formula III, M2^{y2+} comprises one or more selected from the group consisting of Li⁺, Na⁺, K⁺, Rb⁺, Cs⁺, Mg²⁺, Ca²⁺, Ba²⁺, Fe²⁺, Ni²⁺, Al³⁺, Fe³⁺, and Ni³⁺; and y2=1, 2, or 3.

6. The electrolyte solution according to claim 1, wherein a mass ratio of the first additive to the second additive is 0.02-500.

7. The electrolyte solution according to claim 1, wherein a mass ratio of the first additive to the second additive is 0.2-100.

8. The electrolyte solution according to claim 1, wherein based on the total mass of the electrolyte solution, the mass content of the cyclic ester compound is 0.01%-5%.

9. The electrolyte solution according to claim 1, wherein based on the total mass of the electrolyte solution, the mass content of the cyclic ester compound is 0.1%-2%.

10. The electrolyte solution according to claim 1, wherein based on the total mass of the electrolyte solution, the mass content of fluorosulfonate is 0.001%-5%.

11. The electrolyte solution according to claim 1, wherein based on the total mass of the electrolyte solution, the mass content of fluorosulfonate is 0.1%-2%.

12. The electrolyte solution according to claim 1, wherein based on the total mass of the electrolyte solution, the mass content of difluorophosphate is 0.001%-5%.

13. The electrolyte solution according to claim 1, wherein based on the total mass of the electrolyte solution, the mass content of difluorophosphate is 0.1%-2%.

14. The electrolyte solution according to any one of claims 1 to 13, wherein the electrolyte solution further comprises a third additive, and the third additive comprises one or more selected from the group consisting of fluoroethylene carbonate, difluoroethylene carbonate, vinylene carbonate, vinylethylene carbonate, maleic anhydride, succinic anhydride, and triallyl phosphate.

15. The electrolyte solution according to claim 14, wherein based on the total mass of the electrolyte solution, the mass content of the third additive is 0.01%-10%.

16. The electrolyte solution according to claim 14, wherein based on the total mass of the electrolyte solution, the mass content of the third additive is 0.1%-5%.

17. The electrolyte solution according to claim 1, wherein the electrolyte solution comprises a sodium salt, and the sodium salt comprises one or more selected from the group consisting of NaPF₆, NaBF₄, NaN(SO₂F)₂, NaClO₄, NaAsF₆, NaB(C₂O₄)₂, and NaBF₂(C₂O₄).

18. The electrolyte solution according to claim 1, wherein the electrolyte solution comprises a solvent, and the solvent comprises one or more selected from the group consisting of chain carbonate solvents, chain carboxylate solvents, cyclic carbonate solvents, and ether solvents.

19. The electrolyte solution according to claim 18, wherein the chain carbonate solvent comprises one or more selected from the group consisting of dimethyl carbonate, diethyl carbonate, methyl ethyl carbonate, methyl propyl carbonate, methyl isopropyl carbonate, methyl butyl carbonate, ethyl propyl carbonate, dipropyl carbonate, and dibutyl carbonate;
the chain carboxylate solvents comprise one or more selected from the group consisting of methyl formate, ethyl formate, methyl propionate, ethyl propionate, propyl propionate, ethyl butyrate, methyl acetate, ethyl acetate, and propyl acetate;
the cyclic carbonate solvents comprise one or more selected from the group consisting of ethylene carbonate, propylene carbonate, butylene carbonate, vinylene carbonate, fluoroethylene carbonate, ethylene sulfite, propylene sulfite, vinylethylene carbonate, 4-ethynyl-1,3-dioxolan-2-one, cis-4,5-difluoro-1,3-dioxolan-2-one, trans-4,5-difluoro-1,3-dioxolan-2-one; and
the ether solvents comprise one or more selected from the group consisting of dioxolane, tetrahydrofuran, 2-methyltetrahydrofuran, tetrahydropyran, 1,2-dimethoxyethane, diethylene glycol dimethyl ether, 1,2-diethoxyethane, and 1,2-dibutoxyethane.

20. A sodium secondary battery, comprising a positive electrode plate, a negative electrode plate, and the electrolyte solution according to any one of claims 1 to 19.

21. The sodium secondary battery according to claim 20, wherein the positive electrode plate comprises a positive electrode current collector and a positive electrode material layer on at least one side of the positive electrode current collector; the positive electrode material layer comprises a positive electrode active material, and the positive electrode active material comprises at least one selected from the group consisting of layered transition metal oxides, Prussian blue compounds, and polyanion compounds.

22. The sodium secondary battery according to claim 21, wherein the layered transition metal oxide comprises NaₓMnₐFe_{b}Ni_{c}M_{d}NₑO_{2-δ}Q_{f}, in which, M comprises at least one selected from the group consisting of Ti, Li, V, Cr, Cu, Zn, Zr, Nb, Mo, Sn, Hf, Ta, Mg, and Al; N comprises at least one selected from the group consisting of Si, P, B, S, and Se; Q comprises at least one selected from the group consisting of F, Cl, and N; 0.66≤x≤1, 0<a≤0.7, 0<b≤0.7, 0<c≤0.23, 0≤d<0.3, 0≤e≤0.3, 0≤f≤0.3, 0≤δ≤0.3, a+b+c+d+e=1, 0<e+f≤0.3, 0<(e+f)/a≤0.3, 0.2≤d+e+f≤0.3, and (b+c)/a≤1.5.

23. The sodium secondary battery according to claim 22, wherein the positive electrode active material comprises a layered transition metal oxide containing a Cu element; and
a ratio of the mass content of the cyclic ester compound in the electrolyte solution to the mass content of the Cu element in the positive electrode active material is greater than or equal to 0.002.

24. The sodium secondary battery according to claim 23, wherein the mass content of the Cu element in the positive electrode active material is less than or equal to 23%.

25. The sodium secondary battery according to claim 23, wherein the mass content of the Cu element in the positive electrode active material is 6.5%-18%.

26. The sodium secondary battery according to claim 20, wherein the negative electrode plate comprises a negative electrode current collector and a negative electrode material layer on at least one side of the negative electrode current collector, and the negative electrode material layer comprises a Ca element; and
a ratio of the mass content of the cyclic ester compound in the electrolyte solution to the mass content of the Ca element in the negative electrode active material is greater than or equal to 1.

27. The sodium secondary battery according to claim 26, wherein the mass content of the Ca element in the negative electrode material layer is 0.1-3,000 ppm.

28. The sodium secondary battery according to claim 26, wherein the mass content of the Ca element in the negative electrode material layer is 50-1,000 ppm.

29. The sodium secondary battery according to any one of claims 26 to 28, wherein the negative electrode material layer further comprises a negative electrode active material, and the negative electrode active material comprises one or more selected from the group consisting of hard carbon, metallic sodium, tin alloy, and a metal oxide.

30. The sodium secondary battery according to claim 20, wherein at a charge rate of 0.05 C, the capacity of the negative electrode plate within the charge range of 0.5-1 V is 9-140 mAh/g.

31. The sodium secondary battery according to claim 20, wherein at a charge rate of 0.05C, the capacity of the negative electrode plate within the charge range of 0.5-1 V is 18-70 mAh/g.

32. An electrical apparatus, comprising the sodium secondary battery according to any one of claims 20 to 31.
